# EUROPÄISCHE PATENTSCHRIFT

(11) **EP 2 852 458 B1**
(45) Veröffentlichungstag und Bekanntmachung des Hinweises auf die Patenterteilung: **08.07.2020**
(21) Anmeldenummer: 13727823.0
(22) Anmeldetag: 23.05.2013
(51) Int. Cl.: B01J 19/00, G01N 33/543

(54) **VERFAHREN ZUR ECHTZEIT-DETEKTION VON MOLEKÜLANLAGERUNGEN UND/ODER ÜBERWACHUNG DES HERSTELLUNGSPROZESSES EINES MOLEKÜL-MIKROARRAYS**
METHOD FOR REAL-TIME DETECTION OF MOLECULAR ACCUMULATIONS AND/OR MONITORING THE PRODUCTION PROCESS OF A MOLECULAR MICROARRAY
PROCÉDÉ POUR DÉTECTER EN TEMPS RÉEL DES AMAS DE MOLÉCULES ET/OU POUR SURVEILLER LE PROCESSUS DE PRODUCTION D'UN MICRORÉSEAU DE MOLÉCULES

(30) Priorität: 23.05.2012 DE 102012104453; 11.02.2013 EP 13154822
(43) Veröffentlichungstag der Anmeldung: 01.04.2015
(73) Patentinhaber: Albert-Ludwigs-Universität Freiburg, 79085 Freiburg (DE)
(72) Erfinder: ROTH, Günter, 79110 Freiburg (DE)
(74) Vertreter: Hertin und Partner Rechts- und Patentanwälte PartG mbB
(86) Internationale Anmeldenummer: PCT/EP2013/060660
(87) Internationale Veröffentlichungsnummer: WO 2013/174942

(56) Entgegenhaltungen:
- WO-A1-2004/027093
- WO-A1-2009/039208
- WO-A2-01/27327
- WO-A2-2005/108604
- WO-A2-2012/030961
- US-A1- 2009 312 188
- HARINI CHANDRA ET AL: "Cell-free synthesis-based protein microarrays and their applications", PROTEOMICS, Bd. 10, Nr. 4, 1. Februar 2010 (2010-02-01), Seiten 717-730, XP055077310, ISSN: 1615-9853, DOI: 10.1002/pmic.200900462 in der Anmeldung erwähnt
- JONATHAN M. ROTHBERG ET AL: "An integrated semiconductor device enabling non-optical genome sequencing", NATURE, Bd. 475, Nr. 7356, 1. Januar 2011 (2011-01-01), Seiten 348-352, XP055045308, ISSN: 0028-0836, DOI: 10.1038/nature10242
- ROSITSA KARAMANSKA ET AL: "Surface plasmon resonance imaging for real-time, label-free analysis of protein interactions with carbohydrate microarrays", GLYCOCONJUGATE JOURNAL, KLUWER ACADEMIC PUBLISHERS, BO, Bd. 25, Nr. 1, 16. Juni 2007 (2007-06-16), Seiten 69-74, XP019573089, ISSN: 1573-4986

## Beschreibung

Die Erfindung betrifft ein Verfahren zur Herstellung eines Mikroarrays, wobei die Herstellung dieses Arrays durch die Anlagerung der erzeugenden Produktmoleküle in Echtzeit detektiert wird.

### Stand der Technik

Der Grundgedanke "Mikroarrays zu kopieren" ist noch jung und bisher von nur wenigen Forschungsgruppen und Firmen aufgegriffen worden. Entsprechend wenig Optimierungen dieses Kopierprozesses wurden bisher vorgenommen. Eine Optimierung stellt die Handhabung mittels einer Mikrofluidik dar (PCT/EP2012/051816, Device and method for generation of molecular microarrays). Betrachtet man "das Kopieren" jedoch als Analogie zum Fotokopieren, so wurden bisher nur die Punkte der Handhabung adressiert, jedoch noch keine "Qualitätskontrolle der Kopie" selbst. Beim Fotokopierer werden die Alterung des Kopierers, die Tagesleistung des Gerätes sowie die Eigenschaften der verwendeten Farben und Papiere durch eine Echtzeit-Kontrastkontrolle so berücksichtigt, dass stets eine gleichbleibend gute Kopie erzeugt wird. Diese "Kontrastkontrolle" wird ebenfalls für das Kopieren eines Mikroarrays benötigt, da insbesondere die verwendeten Reaktionsmixe z.B. Enzymgemische, und die Vorlagemoleküle z.B. DNA-Array-Vorlagen, starken Qualitätsschwankungen unterliegen und je nach Tagesleistung mehr oder weniger schnell entsprechende Kopien oder Derivate erzeugen. Alle bisherigen Veröffentlichungen haben nur eine Endpunktmessung durchgeführt. Dabei werden die entstandenen Moleküle erst nach der Erzeugung der Kopie angefärbt und anhand dieses Anfärbens wird das Entstehen der Kopie nachgewiesen. Damit ist einerseits die Kopie für weitere Messungen nahezu unbrauchbar und andererseits gibt es während der Erzeugung der Kopie keinerlei Möglichkeit festzustellen, wie weit die Kopie schon gediehen ist und ob der Kopierprozess verlängert, verkürzt oder gleich belassen werden sollte.

Die Herstellung von Protein-Mikroarrays erfolgt in klassischer Weise durch Erzeugung der Proteine in Zellen, Aufreinigung jedes einzelnen Proteins gefolgt von einem Transfer auf das Mikroarray. Dieser Transfer-Schritt wird mittels eines "Druckersystems" gewährleistet. Diese Techniken sind bereits seit Jahrzehnten in der Anwendung. Die aufwendige Herstellung der Proteine durch Aufreinigung von Zellkulturen sorgt dafür, dass die entsprechenden Protein-Mikroarrays um die 1.000 € pro Array kosten. Eine chemische Synthese der Proteine scheidet aufgrund der ungenügenden Reinheiten der chemischen Synthese selbst aus. Kurze ProteinFragmente, sogenannte Peptide, sind synthetisch zugänglich und erlauben die Herstellung von Peptid-Mikroarrays. Jedoch ist die biochemische Aussagekraft von Peptidmikroarrays deutlich geringer als von Protein-Mikroarrays.

Neuere Ansätze erzeugen Protein-Mikroarrays aus sehr viel einfacher herstellbaren DNA-Mikroarrays. Der im Februar 2010 erschienene Review (Chandra, Srivastava, "Cell-free synthesis-based protein microarray and their applications", Proteomics, vol. 10, pp. 717-730, 2010) zeigt die einzelnen Varianten und bisher realisierten Möglichkeiten, um aus einem DNA-Mikroarray ein Protein-Mikroarray herzustellen. Damit aus der DNA überhaupt Protein entstehen kann, muss die DNA über gewisse Erkennungssequenzen verfügen, um so "expression ready" zu sein. Vor allem die Verwendung von PISA und NAPPA wird beschrieben.

2001 veröffentlichten He und Taussig das PISA-System (He, Taussig, "Single step generation of protein arrays from DNA by cell-free expression and in situ immobilisation (PISA method)", Nucleic Acids Research, vol. 29, no. 15, p. art-e73, Aug.2001). Hierbei wird die DNA direkt vor der Verwendung mit dem zellfreien Expressionssystem gemischt und dann auf eine Oberfläche dispensiert. In diesem kleinen Flüssigkeitstropfen wird dann Protein erzeugt. Das Protein enthält ein His-Tag, welches an die Nickel-NTA-Oberfläche bindet. Sobald genug Protein an die Oberfläche des Mikroarrays gebunden ist, folgt ein Waschschritt. Die DNA und alle Proteine ohne His-Tag werden dabei abgewaschen. Nur das His-Tag-Protein bleibt "gereinigt" an der Oberfläche zurück. Das Mikroarray wird dann direkt für Bindungsmessungen eingesetzt. 2006 wurde mit dieser Technik ein Protein-Mikroarray mit 13.000 Proteinen veröffentlicht (Sobek et al, "Microarray technology as a universal tool for high-throughput analysis of biological systems", Combinatorial Chemistry & High Throughput Screening, vol. 9, no. 5, pp. 365-380, June2006)

Zwar umgeht man so das aufwendige Aufreinigen der einzelnen Proteine (im Vergleich zu den klassischen Techniken), der Aufwand beim unverzüglich Mischen der einzelnen DNA-Sequenzen mit dem zellfreien Expressionssystem direkt vor dem Transfer auf das Mikroarray ist jedoch enorm und sollte für jeden einzelnen Spot des Mikroarrays unter identischen Konzentrations- und Zeitparametern stattfinden. Besonders unvorteilhaft ist daher, dass keine parallele Kontrolle stattfindet.

2004 veröffentlichte LaBear das NAPPA-System (Ramachandran et al, "Self-assembling protein microarrays", Science, vol. 305, no. 5680, pp. 86-90, July2004). Hierbei wird zunächst eine Oberfläche hergestellt, die Streptavidin und einen Antikörper gegen eine Proteinsequenz (hier His-Tag) trägt. Auf diese Oberfläche wurde DNA gedruckt, welche über ein Biotin an das Streptavidin bindet. Diese DNA-Mikroarrays lassen sich für 1 bis 2 Jahre lagern. Die Haltbarkeit des gesamten NAPPA-Mikroarray ist nur durch die Lagerbarkeit des Antikörpers begrenzt. Direkt vor Gebrauch wird das komplette Mikroarray mit zellfreiem Expressionssystem überschichtet. Es bildet sich an jedem DNA-Spot ein anderes Protein, welches frei in den Raum diffundiert. Da das Protein eine Sequenz enthält, die an den Antikörper bindet, wird es rein statistisch mit hoher Wahrscheinlichkeit auf dem Spot oder in der direkten Umgebung des Spots gebunden. Nach einem Waschschritt kann das Mikroarray verwendet werden. Es bleibt nur die DNA und das gebildete Protein auf der Oberfläche. 2008 wurde auf diese Weise ein Mikroarray mit etwas über 1.000 Proteinen hergestellt (Ramachandran, Srivastava, LaBaer, "Applications of protein microarrays for biomarker discovery", Proteomics Clinical Applications, vol. 2, no. 10-11, pp. 1444-1459, Oct.2008).

Der enorme Vorteil das NAPPA gegenüber dem PISA ist, dass eine beliebige Anzahl an DNA-Mikroarrays anfertigt und einlagert werden kann. Erst kurz vor Gebrauch wird das Protein hergestellt. Das doppelte Bindungssystem aus Streptavidin und Antikörpern (Kostenfaktor) und das Verbleiben der DNA auf der Oberfläche (stört nachfolgenden Assay), erweisen sich jedoch als nachteilig.

Besonders bei kosten- und zeitintensiven Verfahren wie PISA und NAPPA ist es unvorteilhaft, dass es keine Möglichkeit der Kontrolle des Verfahrens gibt. So kommt es immer wieder zur Herstellung von unbrauchbaren Arrays, da die Reaktion zu früh abgebrochen wird oder die entstandene "Kopie" nicht den Ansprüchen genügt.

2008 veröffentlichte Taussig mit dem DAPA-System (He et al., "Printing protein arrays from DNA arrays", Nature Methods, vol. 5, no. 2, pp. 175-177, Feb.2008) eine Methode, die es erlaubt, von einer DNA-Mikroarray-Vorlage eine beliebige Anzahl an Protein-Mikroarrays zu generieren. Hierbei wird zunächst die codierende DNA auf eine Epoxy-funktioinalisierte Oberfläche gespottet. So wird ein klassisches DNA-Mikroarray erzeugt. Auf dieses DNA-Mikroarray wird eine dünne Membran gelegt, die mit zellfreiem Expressionssystem getränkt ist. Sobald der Kontakt zustande kommt und das Mikroarray benetzt wird, werden die Proteine hergestellt und diffundieren ungerichtet in die Membran. Auf die Rückseite dieses "Sandwich" wird daher sofort eine Oberfläche gelegt, an die die Proteine binden. Sobald ein Protein durch die Membran diffundiert ist, bindet dieses an die Oberfläche und bildet ein Protein-Mikroarray. Nach ca. 3 bis 4 Stunden wird das Sandwich geöffnet und das DNA- sowie das Protein-Mikroarray werden gereinigt. Danach kann das Protein-Mikroarray für die Bindungsmessungen verwendet und das DNA-Mikroarray kann bis zur Herstellung des nächsten Protein-Mikroarrays wieder eingelagert werden.

Klare Vorteile des DAPA-Systems sind, dass die erzeugten Protein-Mikroarrays keine kontaminierende DNA enthalten und das originale DNA-Mikroarray jederzeit wiederverwendet werden kann. Die Wiederverwendbarkeit des DNA-Mikroarrays stellt einen deutlichen Fortschritt gegenüber aller früheren Methoden dar. Nachteilig ist jedoch, dass sich das Auflegen der getränkten Membran nicht klar definiert durchführen lässt und die Membran selbst ein nicht-gewobenes und damit ebenfalls undefiniertes Material darstellt. Zudem beschädigt der physikalische Kontakt zwischen der Membran und den Oberflächen sowohl das DNA- als auch das Protein-Mikroarray. Dies erschwert die Wiederholgenauigkeit der Methode. Da eine Kontrolle des Kopier- bzw. Derivatisiervorgangs bisher nicht durchführbar war, kann nicht während des Verfahrens festgestellt werden, ob eine ausreichend gute Kopie erzeugt werden wird. Wäre solch eine Kontrolle möglich, könnte bei eines verschlechterten DNA-Mikroarrays die Reaktionszeit entsprechend verlängert werden. Auch wäre es möglich, eine gesicherte Aussage treffen zu können, ab wann eine weitere Wiederverwendung desselben Arrays nicht mehr zufriedenstellenden Ergebnisse liefern wird. Dadurch können hohe Kosten und eine hoher Zeitaufwand minimiert werden, da nicht erst nach Abschluss des Verfahrens festgestellt werden kann, dass die Vorlage nicht mehr den Anforderungen entsprach.

Aus der WO 2009/039208 A1 ist eine Vorrichtung zum Drucken von Hydrogelbasierten Mikroarrays bekannt.

In der WO 01/27327 A2 wird ein Verfahren und eine Vorrichtung zur Durchführung einer großen Zahl an Reaktionen unter Verwendung von Array Assembly offenbart. Dabei wird durch das in Kontakt bringen von zwei Arrays eine Vielzahl von chemischen und biologischen Reaktionen ermöglicht. Sind außerdem offenbart, dass die Amplifikation von Po Oligonukleotide dabei mit einer Detektionsreaktion verknüpft wird.

Im Stand der Technik auf dem Gebiet der Erzeugung von Mikroarraykopien ([1] - [6]) sind keinerlei Anregungen oder Hinweise zu entnehmen, die auf eine Kombination mit Echtzeit-Detektionsmethoden hinweisen. Bisher wurde eine solche Lösung noch nicht vorgeschlagen oder angeregt.

Keine der beschriebenen Methoden sehen eine Echtzeitüberwachung der Entstehung der Kopie beziehungsweise des Derivats vor. Die einzige Detektionsmöglichkeit die im Stand der Technik bekannt ist, dient zur Überwachung, ob das Gerät korrekt befüllt ist und keine Luftblasen entstanden sind, die sonst einen "weißen Fleck" auf der Kopie erzeugen würden. Dies geschieht über ein sogenanntes Detektionsfenster. Eine Aussage über die Qualität oder die Menge der entstandenen Kopie/Derivat kann jedoch nicht getroffen werden.

Bei den bekannten Verfahren ist daher nachteilig, dass diese sehr aufwendig und dadurch zeit- und kostenintensiv sind. Besonders unerwünscht ist daher die fehlgeschlagene Herstellung eines Arrays, der durch ungenügende Proteinmenge oder -reinheit bzw. DNA-Menge oder -Reinheit oder falsch eingestellte Prozesszeiten und -temperaturen nicht verwendet werden kann. Derzeit ist es jedoch nicht möglich, die Herstellung des Arrays schon während des Prozesses zu kontrollieren und zu verfolgen. Damit kann der Kopierprozess nicht überwacht werden und es gibt keine Entscheidungsgrundlage, um zu bestimmen wie lange der Kopierprozess durchgeführt werden muss, um eine gleichbleibend gute Kopie/Derivat zu erhalten.

Aufgabe der Erfindung ist es daher, ein Verfahren bereitzustellen, wodurch die aufgeführten Nachteile vermieden werden.

### Beschreibung

Gelöst wird die Aufgabe durch die unabhängigen Ansprüche. Vorteilhafte Ausführungen ergeben sich aus den Unteransprüchen.

In einer ersten Ausführungsform betrifft die Erfindung ein Verfahren zur Herstellung eines Mikroarrays, umfassend
a. Bereitstellung eines ersten originären Arrays umfassend eine, ersten Support-Oberfläche, an die mindestens ein Vorlagemolekül gebunden ist,
b. Bereitstellung einer zweiten Support-Oberfläche (Empfänger-Oberfläche), die in eine räumliche Orientierung zur ersten Support-Oberfläche gebracht wird,
c. Bereitstellung einer Flüssigkeit, enthaltend ein enzymatisches und/oder chemisches Reaktionssystem, zwischen der ersten und der zweiten Oberfläche, sodass Bereiche der beiden Oberflächen über die Flüssigkeit miteinander in Kontakt stehen,
d. Herstellung eines Produktmoleküls mittels des Vorlagemoleküls und des enzymatischen und/oder chemischen Reaktionssystems,
e. Transfer des Produktmoleküls zu der zweiten Support-Oberfläche über die Flüssigkeit zwischen der ersten und der zweiten Support-Oberfläche, wobei eine Korrelation besteht zwischen dem Bindungsort des Vorlagemoleküls an der ersten Support-Oberfläche und der Anlagerung des entsprechenden Produktmoleküls an der zweiten Support-Oberfläche,
f. wobei die Anlagerung des Produktmoleküls an der Empfänger-Oberfläche in Echtzeit detektiert wird wobei die erste Support-Oberfläche Referenzspots umfassend Referenzmoleküle umfasst, wobei aus den Referenzmolekülen in Schritt d) Produktmoleküle entstehen und die Entstehung dieser Produktmoleküle gemäß Schritt e) und f) in Echtzeit detektiert wird und wobei das Verfahren abgebrochen wird sobald die Referenzspots eine vorgegebene Referenzgröße erreicht haben.

Die zweite Support-Oberfläche wird somit durch das Verfahren zu einem Mikroarray. Es war dabei völlig überraschend, dass die Detektion der Produktanlagerung noch während des Herstellungsprozesses vorgenommen werden kann, ohne dass die Herstellung selbst oder die Qualität des Produktes beeinträchtig wird. Die Echtzeit-Detektion erlaubt einen besseren Einblick in die Biochemie und Kinetik der Herstellung der Produktmoleküle. Durch dieses bessere Verständnis können bessere Herstellungsprotokolle erzeugt werden. Zeitgleich ermöglicht es die Erfindung aber auch den Herstellungsprozess dann zu beenden, wenn das Produkt den gewünschten Kontrast erreicht hat. Dies ist bisher im Stand der Technik nicht möglich gewesen. Insgesamt erlaubt die Erfindung erstmals eine Qualitäts- und Kontrastkontrolle des Herstellungsvorgangs. Somit kann das Herstellungsverfahren von Mikroarrays wesentlich effizienter und dadurch letztlich kostengünstiger gestaltet werden. Zudem kann gewährleistet werden, dass stets eine gleichbleibende Qualität des erzeugten Arrays auf der zweiten Support-Oberfläche gewährleistet werden kann.

Als Kontrast im Sinne der Erfindung wird insbesondere die Dichte der Moleküle auf der Oberfläche bezeichnet.

Produktmoleküle im Sinne der Erfindung sind besonders bevorzugt Amplifikate und/oder Derivate des Vorlagemoleküls. Als Produkt wird bevorzugt die Gesamtheit der hergestellten Produktmoleküle bezeichnet.

Eine Kopie ist im Sinne der Erfindung stellt ein Produktmolekül beziehungsweise die Gesamtheit der Produktmoleküle dar. Demnach werden als Kopie nicht nur identische Moleküle bezeichnet, sondern jede Art des Produktmoleküls die durch Schritt d) entstehen können. Eine Kopie kann daher auch ein Amplifikat oder ein Derivat sein. Somit kann die Kopie eines DNA-Vorlagemoleküls zum Beispiel ein DNA-Produktmolekül aber auch en RNA- oder ein Protein-Produktmolekül sein.

Echtzeit-Detektion im Sinne der Erfindung meint insbesondere, dass das Entstehen der Produktmoleküle an der ersten Support-Oberfläche, das Vorhandensein im Zwischenraum zwischen der ersten und zweiten Support-Oberfläche beziehungsweise die Annäherung oder die Anlagerung der Produktmoleküle an die zweite Support-Oberfläche noch während der Verfahrens detektiert wird. Besonders bevorzugt ist die Detektion während oder kurz nach der Anlagerung an die zweite Support-Oberfläche. Somit können die Produktmoleküle entweder während ihrer Entstehung, vor und/oder während der Anlagerung und/oder kurz nach der Anlagerung detektiert werden. Damit wird verhindert, dass zunächst das Herstellungsverfahren mit einem nachgeschalteten Detektionsverfahren abläuft. Es ist daher bevorzugt, dass der Aufbau unverändert bleibt und keine zusätzlichen Arbeitsschritte eingeleitet werden müssen. Das Verfahren gewinnt somit an Effizienz und Geschwindigkeit. Außerdem wird die Kontaminierungsgefahr gesenkt, da weniger Handgriffe notwendig sind. Zudem können beschleunigt oder verlangsamt ablaufende Prozesse direkt während der Herstellung erfasst werden. In die Prozesse kann daher so eingegriffen werden, dass stets ein Endprodukt mit gleichbleibender oder nahezu gleichbleibender Produktmolekülmenge erzeugt werden kann, indem der Prozess zum Beispiel entsprechend früher, bei zu schnell laufender Reaktion, oder später, bei zu langsam laufender Reaktion, beendet wird.

Mittels der Echtzeit-Detektion ist es möglich den Herstellungsprozess direkt zu überwachen. Somit können Informationen über das Entstehen des Produktes (z.B. der Kopie und/oder des Derivats) gesammelt werden. Solche Informationen beziehen sich beispielsweise auf die Kinetik, Temperaturabhängigkeit, den Vergleich diverser Randbedingungen wie pH-, Salzgehalt etc und diverse Hersteller. Zugleich kann der Herstellungsprozess jederzeit beendet, wenn das Produkt die gewünschte Oberflächenbelegung (Kontrast) erreicht hat. Bei langsamer ablaufenden Reaktionen kann dahingehend auch die Herstellungszeit gemäß d), also zum Beispiel die Amplifikationszeit, verlängert werden. Weiterhin kann während des Herstellungsprozesses vermessen werden, ob alle Spots des entstehenden Arrays die gleiche Intensität aufweisen, oder ob einzelne Spots "ausfallen".

Durch die Erfindung ist es erstmals möglich, einen Mikroarray zu kopieren und diese Kopieerzeugung parallel zu detektieren. Ein wesentlicher Unterschied zum Stand der Technik liegt darin, dass die Detektion während der Erzeugung der Kopie abläuft und nicht erst dann, wenn die Herstellungsreaktion bereits abgeschlossen ist. Nur so kann sichergestellt werden, dass der Reaktionsschritt nach d) noch beeinflusst werden kann. Eine solche Beeinflussung wird bevorzugt über eine zeitliche Steuerung (Abbruch oder Verlängerung der Reaktion) oder eine thermische Einflussnahme (Erhitzen bzw. Abkühlen der Reaktionskammer zur Beschleunigung bzw. Verlangsamung der Reaktion) durchgeführt. Sie kann jedoch auch über die Steuerung anderer Parameter, wie beispielsweise pH-Wert oder elektrische Felder erfolgen. Auch eine Steuerung über eine Kombination aus mehreren Parametern ist möglich. So kann die Reaktion zum Beispiel bei Erreichen eines gewünschten Ergebnisses durch Abkühlen unterhalb einer kritischen Temperatur beendet werden.

Im Sinne der Erfindung, sind die beiden Oberflächen bevorzugt gegenüberliegend räumlich angeordnet. Es ist außerdem bevorzugt, dass das Verfahren gemäß der Schritte a) bis e) ein PISA, NAPPA oder DAPA Verfahren umfasst.

Die Erfindung betrifft ebenfalls ein Verfahren zur Echtzeit-Detektion von Produktmolekülanlagerung auf einer Empfänger-Oberfläche, umfassend die Verwendung von Mitteln, die die Anlagerung detektieren und/oder messen, wobei die angelagerten Produktmoleküle durch einen enzymatischen Schritt von einem originären Mikroarray, bevorzugt einem Nukleinsäure-Mikroarray, synthetisiert werden.

Außerdem bevorzugt ist das Verfahren dadurch gekennzeichnet, dass zwischen der ersten und der zweiten Support-Oberfläche ein Spalt besteht, bevorzugt ein mirkofluider Spalt, der vor, nach oder während der räumlichen Orientierung der ersten und zweiten Support-Oberfläche mit der Flüssigkeit gefüllt wird. Ein Vorteil ist, dass durch den Spalt die Oberflächen weniger physikalischem Stress ausgesetzt sind und es so zu keiner Abnutzung kommen kann.

Die Schritte a) bis c) können demnach in beliebiger Reihenfolge erfolgen. Ein Bereitstellen der Flüssigkeit nach dem die beiden Supportoberflächen räumlich zueinander gebracht wurden ist vorteilhaft, da die Schritte a) und b) durchgeführt werden können, ohne dass die Reaktion bereits startet. Der Spalt fungiert somit als physikalisch Barriere, sodass die beiden Oberflächen nicht miteinander in direkten Kontakt kommen. Diese Barriere wird erst überwunden, wenn die Flüssigkeit hinzugegeben wird. Somit ist es möglich, das Verfahren weitgehend vorzubereiten, ohne dass es bereits zur Herstellung der Kopie kommt. Es kann aber auch vorteilhaft sein, die Flüssigkeit auf eine der beiden Support-Oberflächen zu geben und anschließend die zweite Support-Oberfläche anzuordnen. Je nachdem welche Art der Vorrichtung gewählt wird, kann diese Ausführungsform besser geeignet sein, da die Flüssigkeit schnell und einfach auf die Oberfläche gegeben werden kann und die gesamte Fläche gut erreichbar ist. Ein Fachmann ist in der Lage die geeignete Reihenfolge der Schritte a) bis c) für den jeweiligen Aufbau und Anwendung zu bestimmen ohne dabei selbst erfinderisch tätig zu werden.

Ein besonderer Vorteil der Erfindung ist, dass durch das erfindungsgemäße Verfahren zur Herstellung eines Mikroarrays mit gleichzeitiger Kontrastkontrolle ist auch, dass die gezielte Steuerung des Herstellungsprozesses deutlich bessere Ergebnisse erzielt werden können. So ist es möglich besonders lange Nukleinsäureabschnitte, zum Beispiel genomische DNA, als Vorlagemoleküle einzusetzen. Dies stellt einen enormen Vorteil gegenüber dem Stand der Technik dar. So wird in einem Artikel über Mikroarrays von Monya Baker ("Microarrays, megasynthesis", Nature Methods, 2011, vol. 8, pp. 457) zum Beispiel ausgeführt, dass Wissenschaftler unabhängig von der Verwendung einer Oligonukleotidbibliothek immer danach streben mehr und längere Oligonukleotide bei einer geringeren Fehlerrate einsetzen oder untersuchen zu können ("No matter how researchers intend to use libraries of oligonucleotides, they usually want more oligonucleotides, longer oligonucleotides and lower error rates."). Außerdem wird in diesem Artikel der Wissenschaftler Jay Shendure zitiert, der erklärt, dass sich bei einer möglichen Länge von 300 Basenpaaren oder sogar 1000 Basenpaaren eine Vielzahl von Möglichkeiten ergeben würden, die derzeit nicht umgesetzt werden können ("If [the achievable length] was 300 base pairs or even a kilobase, there are a lot of things one could do that one can't do now."). Genau dieses Problem kann durch die Erfindung gelöst werden. So können zum Beispiel Mikroarrays mit DNA-Längen von bis zu 1500 Basenpaaren problemlos ohne Qualitätsverlust hergestellt werden. Dies verdeutlicht, dass die Erfindung dazu beiträgt ein Problem zu lösen, welches die Fachwelt bis zum Prioritätszeitpunkt nicht befriedigend lösen konnte. Es bestand demnach ein dringendes Bedürfnis eine geeignete Lösung für diese Problem zu finden.

Im Sinne der Erfindung umfasst die ersten Support-Oberfläche Referenzspots umfassend Referenzmoleküle, bevorzugt DNA-Referenzmoleküle, wobei die Referenzmoleküle genauso wie Vorlagemoleküle durch Schritt d) in Produktmoleküle umgesetzt werden und die Entstehung dieser Produktmoleküle gemäß Schritt e) und f) in Echtzeit detektiert wird und wobei das Verfahren abgebrochen wird, sobald eine vorgegebene Referenzgröße erreicht wurde. Da in einer bevorzugten Ausführungsform die Kinetik und die Massen sowohl der Referenzmoleküle als auch deren Produktmoleküle bekannt ist, kann über deren Entstehung berechnet oder abgeschätzt werden, wie die Entstehungsreaktion der Produktmoleküle im vorliegenden Prozess gegenüber einem idealen Referenzprozess entstehen. Entsprechend der erhaltenen Messwerte für die Referenzpunkte kann dann die Reaktion entsprechend verändert z.B. verlängert oder verkürzt werden, um wiederum im Idealfall identische Mengen an Produktmolekülen aus den Referenzspots zu erzeugen. Die Verwendung von Referenzen erleichtert daher die Berechenbarkeit und die Handhabung der Steuerung.

Es ist aber auch möglich, dass es sich bei den Referenzmolekülen um Proteine oder jedes andere mögliche Vorlagemolekül handelt. Besonders bevorzugt ist, dass es sich bei den Referenzmolekülen um Vorlagemoleküle handelt, die in bekannter Weise Produktmoleküle bilden und so zu vorhersagbaren Strukturen auf der zweiten Support-Oberfläche führen.

Besonders bevorzugt ist das genannte Verfahren, wobei die Bildung der Produktmoleküle aus den Referenzmolekülen zur Echtzeit-Kontrolle und Regelung der Übertragung verwendet werden, um eine Echtzeit-Messung über den Verlauf der Produktmolekülerzeugung zu ermöglichen.

Diese Ausführungsform eignet sich besonders gut zur Qualitätskontrolle. Es werden Referenzspots aus z.B. DNA erzeugt. Durch den Reaktionsschritt erzeugt die DNA sehr definiert entsprechende Produkte. Diese Produkte bilden während des Kopierprozesses Spots auf der Oberfläche der zweiten Support-Oberfläche, die mittels der Echtzeitmessung detektiert und/oder vermessen werden. Sobald diese Spots die vorgegebene Referenzgröße erreichen, wird der Reaktionsschritt (z.B. der Kopierprozess) abgebrochen. Das Abbrechen des Reaktionsschritts kann zum Beispiel durch Abkühlen erfolgen. Somit wird gewährleistet, das immer eine gleichbleibend gute "Kopie", im Bezug auf die Referenzspots, erzeugt wird; unabhängig von allen anderen Spots die erzeugt werden, insbesondere wenn über diese Spots keinerlei Wissen über deren Entstehungskinetik besteht. Diese Methode kann bevorzugt für Vorlagemoleküle wie DNA, RNA und Protein verwendet werden. Durch diese Referenz- oder Kontrollspots können zum Beispiel unterschiedliche Temperaturabhängigkeiten einzelner Proteine ausgeglichen werden. Durch diese Ausführungsform ist daher eine weitere Standarisierung des erfindungsgemäßen Verfahrens möglich.

Es ist außerdem bevorzugt, dass die Support-Oberflächen mikrostrukturiert sind und der Spalt durch diese Mikrostruktur zustande kommt. Es ist aber auch möglich, dass ein Spacer zwischen die erste und die zweite Support-Oberfläche gelegt wird, um den Spalt herzustellen.

Es ist außerdem bevorzugt, dass die erste und/oder die zweite Support-Oberfläche Kavitäten aufweisen. Durch solche Kavitäten ist es möglich, dass die Diffusion der Produktmoleküle gelenkt wird und so eine genauere räumliche Zuordnung zwischen Produktmolekül und Vorlagemolekül besteht. Dies hat enorme Vorteile, da das entstehende Array nicht nur die entsprechenden Produktmoleküle des originären Arrays umfasst, sondern diese auch räumlich zuordenbar sind.

Besonders bevorzugt ist, dass sich keine Membran in diesem Spalt befindet. Array-Herstellungsverfahren die eine Membran enthalten sind fehleranfälliger, da in der Membran eine potentielle Fehlerquelle zu sehen ist. Außerdem können durch den Verzicht auf eine Membran sowohl Kosten als auch Zeit eingespart werden. Außerdem wird durch diese Ausführungsform die benötigte Menge an dem Reaktionssystem verringert. Bei der Verwendung einer Membran, wird diese meist mit dem Reaktionssystem getränkt. Hierfür ist jedoch eine große Menge des Reaktionssystems und der darin enthaltenen Komponenten notwendig, was hohe Kosten verursacht. Dies wird durch diese Ausführungsform umgangen.

Außerdem bevorzugt ist das Verfahren, dadurch gekennzeichnet, dass das Vorlagemolekül ausgewählt ist aus der Gruppe umfassend, DNA, RNA, genomische DNA, klonierte DNA Fragmente, Plasmid-DNA, cDNA, PCR-Produkte, synthetisierte DNA-Produkte, synthetisierte DNA-Oligonukleotide, mRNA und/oder synthetisierte RNA. Besonders bevorzugt ist, dass das originäre Array ausgewählt ist aus der Gruppe umfassend DNA-Array, RNA-Array.

In einer weiteren bevorzugten Ausführungsform betrifft die Erfindung das Verfahren, dadurch gekennzeichnet, dass die zweite Support-Oberfläche nach Anlagerung der Produktmoleküle ein Mikroarray ist. Bevorzugt handelt es sich dabei um ein DNA-Array, RNA-Array, Protein-Array und/oder ein Array aus synthetischen Molekülen.

Für das Verfahren ist es unerheblich ob es sich bei den Produktmolekülen um DNA, RNA, Proteine, synthetisierte Moleküle oder andere Moleküle handelt. Dies ist besonders vorteilhaft, da so ein Aufbau für die Herstellung unterschiedlichster Arrays verwendet werden kann. Die Echtzeit-Detektion ist dabei für alle entstehenden Produktmoleküle möglich.

Im Sinne der Erfindung bedeutet Kopieren insbesondere die Amplifikation der Vorlagemoleküle sowie auch deren Derivatisierung. In der vorliegenden Erfindung bezeichnet ein Amplifikat insbesondere die Gesamtheit aller durch eine Amplifikationsreaktion hergestellten Abbilder eines einzelnen Vorlagemoleküls. Es ist vorzugsweise identisch oder ein eindeutig ableitbares Derivat des Vorlagemoleküls. Das Amplifikat oder Teilabschnitte desselben können dabei von einem oder mehreren Teilabschnitten oder der Gesamtheit eines oder mehrerer Probenfragmente abgeleitet sein. Das Produktmolekül ist insbesondere ein Amplifikat und/oder Derivat, welches vorteilhafterweise auch eine zum ursprünglichen Vorlagemolekül abweichende Molekülklasse aufweisen kann.

Bei ersten Versuchen wurde DNA als Vorlagemolekül gewählt. Durch die Reaktionsschritte sollte eine Protein-"Kopie" erzeugt werden. Es zeigte sich überraschend, dass die Produktmoleküle (hier Proteine) im miniaturisierten System deutlich schneller als erwartet ablief. Insbesondere im Vergleich zum DAPA-System wurde eine 3 bis 10-fach schnellere Reaktionszeit erreicht, so dass zukünftig eine Protein-Kopie nicht mehr nach etwa 90 min, sondern schon nach etwa 15 min beendet werden kann. Da diese Beschleunigung sehr unvorhersehbar war und es sich zeigte, dass bereits kleine Änderungen im Enzymsystem deutliche Änderungen in der Erzeugungszeit der Kopie hervorrief, konnte als Lösung dieses nicht einfach abschätzbaren Effekts die Echtzeitdetektion der Anlagerung der Moleküle an die Oberfläche etabliert werden.

Bei der DNA-zu-DNA-Kopie (Vorlagemolekül ist DNA und Produktmolekül ist DNA), konnte ein DNA-Mikroarray von bisher nicht bekannter Reinheit erzeugt werden. Dies lag unter anderem auch an den verwendeten Enzymen. Die Reinheit ist so hoch, dass sie voraussichtlich nicht ein Mal mit einem Sequenzierprozess erfasst werden kann, da dieser stärker fehlerbehaftet ist, als der verwendete Kopierprozess. Somit stehen aktuell keine Messtechniken zur Verfügung die Güte der Reinheit vollends nachzuweisen. Die Reinheit ist höher als der Messfehler gängiger Nachweismethoden.

Weiterhin reichte vorteilhafterweise bereits eine DNA aus, um eine Kopie einer kompletten Volumeneinheit zu erreichen.

Somit erlaubt das Verfahren gemäß der Erfindung eine schnellere, synthetisch reinere, weniger material- und arbeitsintensive Herstellung von Mikroarrays, die zu einer drastischen Kostenersparnis führt und zudem die Erzeugung von Mikroarrays erlaubt, wie sie mit bisherigen Verfahren nicht herstellbar sind, oder nur unter hohem Zeit-, Kosten- und Arbeitsaufwand zu realisieren wären, der jedoch nicht rentable ist.

Außerdem bevorzugt ist das Verfahren dadurch gekennzeichnet, dass es sich bei der Echtzeit-Detektion um ein labelfreies Verfahren handelt, bevorzugt um ein labelfreies Verfahren, dass den Massezuwachs, die Änderung des Brechungsindex, die Änderung von optischen, magnetischen, elektrischen und/oder elektromagnetischen Eigenschaften detektiert.

Die labelfreien oder auch markierungsfreien Verfahren sind besonders vorteilhaft für die Verwendung in dem erfindungsgemäßen Herstellungsverfahren, da sie einerseits zeit- und kosteneffizient sind und andererseits auch schwache Bindungen nachweisen können. Die labelfreien Detektionsmethoden eigenen sich besonders gut, da sie hoch sensitive sind und die Verwendung von Markern und oder Labeln, wie z.B. bestimmte Tags, Farbstoffe oder andere Reagenzien überflüssig machen. Somit werden die Ressourcen die für die Durchführung des Herstellungsverfahrens nötig sind vermindert. Das Herstellungsverfahren wird dadurch vereinfacht und es werden mögliche Fehlerquellen durch den Ausschluss der Marker minimiert. Durch die Verwendung der labelfreien Detektionsmethoden wird es möglich die Anlagerung der Produktmoleküle direkt zu detektieren, ohne dass die Moleküle vorher modifiziert werden müssen. Außerdem ist diese Variante vorteilhaft, da die Qualität des Produktarrays nicht durch Label und Marker beeinträchtigt wird.

Bevorzugte labelfreie Detektionsverfahren sind bildgebenden reflektometrischen Interferenz-Spektroskopie (iRIfS) (vergleiche auch [7]), BIND der Firma SRU Biosystems, surface plasmon resonance (SPR) (vergleiche auch [8]), Biacore-Detektion, Ellipsometrie, Messung der Trübung und/oder Absorption oder die Messung mit elektrischen Elementen. Außerdem können die nachfolgenden Detektionsverfahren labelfrei durchgeführt werden. TIRF (total internal reflection fluorescence) ist ein labelfreies Verfahren, wenn das Produkt anregbar ist. Messung mit Zyklovolatmetrie kann ebenfalls labelfrei durchgeführt werden, wenn das Produkt direkt zugänglich ist. Die Impedanzmessung ist ein labelfreies Detektionsverfahren, wenn das Produkt die elektrischen Eigenschaften der Oberfläche verändert. Wenn das entstehende Produkt Lumineszenz auslöst stellt auch die Lumineszenzmessung ein labelfreies Verfahren dar. Die Fluoreszenzmessung ist ebenfalls labelfrei, wenn das Produkt selbst fluoreszent ist.

In einer weiteren bevorzugten Ausführungsform betrifft die Erfindung das Verfahren, dadurch gekennzeichnet, dass es sich bei der Echtzeit-Detektion um ein Verfahren handelt, welches ein Label verwendet. Es gibt bestimmte Anwendungsbereiche, in denen die Verwendung einer Detektionsmethode mit Label sinnvoll und vorteilhaft sein kann. Der Fachmann ist in der Lage die geeignete Methode für das jeweilige Herstellungsverfahren auszuwählen ohne dabei selbst erfinderisch tätig zu werden. Bevorzugte Detektionsverfahren mit Labeltechnik sind die Messung mit Ladungsmarkern, die Messung mit gequenchter Oberflächenfluoreszenz, TIRF (wobei ein Label zur Erhöhung der Anregbarkeit verwendet wird), Messung mit Zyklovoltammetrie, Impedanzmessung (wenn ein eingebautes Label verwendet wird, welches die elektrischen Eigenschaften verstärkt), Lumineszenzmessung (wenn eine gekoppelte Reaktion stattfindet) oder Fluoreszenzmessung (durch Einbau eines Fluorophors). Durch die Verwendung einer Detektionsmethode mit Label kann die Empfindlichkeit der Detektion erhöht werden und so besonders genaue Ergebnisse erzielt werden.

Außerdem betrifft die Erfindung ein Verfahren zur Herstellung eines Mikroarrays, wobei ein direktes Detektionsverfahren zur Echtzeitdetektion genutzt wird. Ein direktes Nachweisverfahren im Sinne der Erfindung ist bevorzugt iRIfS, BIND, SPR, Biacore, Ellipsometrie, TRIF. Auch eine Messung der Trübung oder eine Adsorptionsmessung können als bevorzugte direkte Nachweisverfahren verwendet werden, wenn das Produkt eine Farbe besitzt. Eine Messung mit elektrischem Element kann ebenfalls als direktes Nachweisverfahren im Sinne der Erfindung verwendet werden, wenn das Molekül geladen ist. Eine Messung mit Ladungsmarkern wird als direktes Detektionsverfahren eingesetzt, wenn der Ladungsmarker in das Molekül eingebaut wurde bzw. von diesem abgespalten wird. Eine Messung mit Zyklovoltammetrie kann als direkte Nachweismethode verwendet werden, wenn das Produkt zugänglich ist. Auch die Impedanzmessung kann für den direkten Nachweis verwendet werden, wenn das Produkt selbst die elektrischen Eigenschaften der Oberfläche verändern kann. Außerdem kann eine Messung mit gequetschter Oberflächenflouresenz für den direkten Nachweis eingesetzt werden, wenn das Produkt die Veränderung bewirkt. Gleiches gilt für die Lumineszenzmessung, wenn das Produkt die Lumineszenz erzeugt und für die Floureszenzmessung, wenn das Produkt selbst floureszent ist. Der Vorteil der Verwendung einer direkten Detektionsmethode liegt darin, dass mögliche Fehlerquellen ausgeschlossen werden, da die Entstehung des Produkts direkt und nicht über weitere Hilfsmoleküle erfolgt.

Es kann jedoch auch bevorzugt sein, die Echtzeitdetektion über einen indirekten Nachweis zu führen. Bevorzugte Detektionsmethoden, die die Entstehung des Produktes indirekt nachweisen, sind iRIfS, BIND, SPR, Biacore, Messung der Trübung, Absorptionsmessung. Bei all diesen Methoden wird für den indirekten Nachweis nicht das Produkt selbst, sondern die Entstehung eines Nebenproduktes oder einer Nebenreaktion nachgewiesen. Weitere indirekte Detektionsverfahren, welche bevorzugt sind, sind Messungen mit elektrischem Element (wenn Nebenprodukte geladen sind oder eine Nebenreaktion stattfindet) Messung mit Ladungsmarkern (wenn Nebenprodukte entstehen, die den Marker enthalten) Messung mit Zyklovoltammetrie (wenn ein Redoxnebenprodukt entsteht), Impedanzmessung (wenn in einem Nebenprodukt eingebaut), TRIF (wenn in einem Nebenprodukt eingebaut), Messung mit gequenschter Obenflächenfloureszenz (wenn ein Nebenprodukt die Veränderung bewirkt), Lumineszenzmessung (wenn ein Nebenprodukt herangezogen wird, z. B. Pyrophasphat) oder Floureszenzmessung (wenn ein Nebenprodukt floureszent wird). Ein Fachmann weiß, wann er für ein jeweiliges Verfahren einen indirekten Nachweis dem direkten bevorzugt.

Besonders bevorzugt sind Detektionsmethoden, die sowohl direkt als auch labelfrei ablaufen.

Weiterhin bevorzugt ist das Verfahren, dadurch gekennzeichnet, dass die Echtzeit-Detektion die Empfänger-Oberfläche als Wellenleiter verwendet.

Außerdem bevorzugt ist das Verfahren, dadurch gekennzeichnet, dass die Detektion der Anlagerung des Produktmoleküls durch eine Methode erfolgt, ausgewählt aus der Gruppe umfassend physikalische Methoden, elektrische Methoden, chemische Methoden, Fluoreszenzmessungen, Lumineszenzmessungen, Spektroskopie, Adsorptionsmessungen, Polarisationsmessungen, Reflektometrische Interferenzspektroskopie, bildgebende reflektometrische Interferenzspektroskopie, Oberflächenplasmonenresonanzspektroskopie, biacore, Ellipsometrie, Polarisations-Anisotropie (vergleiche auch [9]), Trübungsmessung, pH-Messung, Messung der verfügbaren H⁺ Ionen, Messung mit angeregter Oberflächenfluoreszenz, Interne Totalreflexionsfluoreszenzmikroskopie, Messung mit gequenchter Oberflächenfluoreszenz, Messungen mit evaneszenter Feldanregung und/oder Messung mit Ramanspektrokopie.

Besonders bevorzugt ist dabei die labelfreie Detektionsmethode der bildgebenden reflektometrischen Interferenz-Spektroskopie (iRIfS). Hier wird ein Signal durch Interferenz von Licht an dünnen Schichten mit unterschiedlichem Brechungsindex generiert. Sofern also das verwendete Glas einen Brechungsindexunterschied zu Wasser zeigt, kann es für die Signalgenierung herangezogen werden. Eine zusätzliche Signalverstärkung wird erhalten, wenn in das Glas eine hochbrechende Schicht wie z.B. Titanoxid eingebracht wurde. Hierdurch entsteht eine Mehrstrahlinterferenz, die das Signal intensiviert.

Sofern das Vorlagemolekül mittels iRIfS detektiert wird, kann eine Änderung der Oberflächenmasse durch Anbinden der Produktmoleküle detektiert werden. Aber auch andere Oberflächeninterferenztechniken wie z.B. BIND können verwendet werden. BIND ist eine labelfreie Detektionstechnologie die es erlaubt eine Vielzahl von biomolekularen Interaktionen zu detektieren.

Für SPR (surface plasmon resonance) werden freie Elektronen benötigt, die sich zu Oberflächen-Plasmon-Resonanzen anregen lassen. Naturbedingt bedeutet dies, dass die Oberfläche eine dünne Metallschicht (zumeist Kupfer, Gold oder Silber) tragen muss, um diese Resonanzen zuzulassen. Aus Gründen der Stabilität und der Biokompatibilität wird bevorzugt Gold verwendet. Bevorzugt kann auch die labelfreie Technik von Biacore, verwendet werden um Bindungsmessungen durchzuführen. Diese Technik wurde bisher noch nicht für eine Arraykopie verwendet. Es war daher völlig überraschend, dass die Detektion gut Ergebnisse lieferte. Hierzu ist bevorzugt, dass die Empfänger-Oberfläche eine Goldschicht trägt, an die sich dann die kopierten Moleküle abscheiden und dort die Kopie erzeugen. Die Detektion findet ebenfalls direkt an der Oberfläche der Kopie statt.

Auch mittels der optischen Detektionsmethode der Ellipsometrie konnte die Produktentstehung erfolgreich in Echtzeit detektiert werden. Dabei lassen sich ebenfalls Schichtdicken bestimmen und damit die Anlagerung von Molekülen.

Hierbei wird ein einfallender Lichtstrahl an der Oberfläche reflektiert. Sofern sich Moleküle an die Oberfläche anlagern, wird sich das Reflektionsverhalten ändern und im Falle von zirkular oder elliptisch polarisiertem Licht zu einer Verschiebung der Polarisationsanteilen führen. Die Änderung der Polarisationsrichtung entspricht dabei der Masseanlagerung. Die Messung findet ebenfalls an der Oberfläche statt und gibt damit direkt Auskunft über das Entstehen der Produkte. Diese Detektionsmethode ist ebenfalls labelfrei und verfügt daher über die genannten Vorteile. Es war überraschend, dass mit dieser Detektionsmethode eine sehr genaue Bestimmung der Anlagerungsdichte erfolgen konnte. Außerdem ist besonders vorteilhaft, dass bei dieser Methode keine weiteren Stoffe eingesetzt werden müssen.

Weiterhin bevorzugt ist ein Echtzeit-Detektion durch die Messung der Trübung und/oder Absorption. Diese Messung findet nicht an der Oberfläche statt, sondern im darüber liegenden Volumen. Es wird ein Licht eingestrahlt und wahlweise aus der Rückstreuung bzw. der durchtretenden Lichtmenge ermittelt, wie stark die Bereiche über dem Produkt streuen bzw., das Licht absorbieren. Hierzu kann z.B. ein Komplexbildner eingesetzt werden, der aus der ablaufenden biochemischen Reaktion gebildet wird. Sich bildendes Magnesiumphosphat eignet sich hierfür besonders gut [Mori et al (2001), "Detection of loop-mediated isothermal amplification reaction by turbidity derived from magnesium pyrophosphate formation", Biochemical and Biophysical Research Communications 289: 150-154]. Findet die Reaktion statt, so trübt sich die Flüssigkeit oberhalb des Spots und wird dadurch "undurchsichtiger". Sofern Durchlicht gemessen wird, erscheint diese Stelle dunkler, bei Messung der Rückstreuung erscheint die Stelle heller.

Weiterhin hat sich eine Messung mit elektrischen Elementen (vergleiche auch [10]) als vorteilhaft erwiesen. Analog zu Detektion im ION Torrent kann die Empfängeroberfläche auch aufgedruckte Elektroden enthalten, die den pH-Wert und/oder die Verfügbarkeit von H⁺-Ionen vermessen. Sofern eine Produktionsreaktion stattfindet, wird lokal in der Nähe der Reaktion die Konzentration der H⁺-Ionen verändert sein. Dies ist ein indirekter Marker für das Entstehen der Kopie, der erstaunlich zuverlässige Ergebnisse liefern konnte.

Eine direkte Detektion der Kopierreaktion kann über Ladungsmarker und Zyklovoltammetrie bzw. Impedanzmessungen und ähnliches erfolgen. Sofern die Moleküle an der Oberfläche verlängert werden bzw. eine Anbindung stattfindet, werden diese Moleküle die elektrochemischen Eigenschaften der Oberfläche verändern. Diese Änderung ist dann mit entsprechenden sogenannten Interdigital-Elektroden erfassbar und erlaubt somit eine direkte Detektion der Produktionsreaktion.

Bei TIRF (total internal reflection fluorescence) wird in den Glasträger ein Laserstrahl so eingekoppelt, dass er total reflektiert wird. Das an der Oberfläche entstehende Evaneszente Feld regt dann nur Fluorophore an, die sehr nahe an der Oberfläche sitzen. Bisher wurde diese nur dazu verwendet um Bindungen auf Mikroarrays zu detektieren. Es war daher unerwartet, dass auch die Herstellung einer Arraykopie mit diesem System zuverlässig detektierbar war. Um diese DetektionsTechnologie für die Erfindung nutzbar zu machen werden bevorzugt entweder in den Reaktionsmix fluoreszente Monomere hinzugefügt werden, die dann in die Produktmoleküle eingebaut werden (erniedrigte Einbaueffizienz) oder es wird auf Ebene der Vorlagemoleküle ein zusätzliches Molekül hinzugefügt, welches ebenfalls kopiert wird und dann über fluoreszente Eigenschaften verfügt (Konkurrenzreaktion zum eigentlichen Kopieren). Sobald sich diese Biomoleküle an die Oberfläche anlagern erzeugen sie ein Fluoreszenzsignal.

Außerdem kann eine Echtzeit-Detektion über eine Messung mit gequenchter Oberflächen-Fluoreszenz vorteilhaft sein. Auch hierbei handelt es sich um eine labelfreie Fluoreszenz-Technik. Hierzu wird ein DNA-Strang mit einem Fluorophor markiert. An diesen Strang wird dann ein erstes Molekül, das mit einer DNA gelabelt ist, hybridisiert. Durch Anlegen eines elektrischen Wechselfeldes wird die DNA auf die Oberfläche gezogen und der Fluorophor erlöscht durch Quenching. Durch Bindung wird die Masse größer, wodurch sich das "an die Oberfläche ziehen" durch das elektrische Wechselfeld verlangsamt. Somit kann die Massezunahme und damit die Bindung nachgewiesen werden. Diese Methode erlaubt auch direkt einen Nachweis der Entstehung des Produkts.

Weiterhin war es überraschend, dass auch die Messung mit Lumineszenz und/oder Fluoreszenz eine sichere und genaue Echtzeit-Detektion im Sinne der Erfindung ermöglicht. Anstelle der Trübungsmessung kann auch ein Reaktions-Beiprodukt dazu verwendet werden um Luminiszenz oder Fluoreszenz zu erzeugen. Luminiszenz wird beispielsweise bei Sequenzierchips des FLX 454 bereits verwendet und ist unter dem Begriff "Pyrosequencing" etabliert. Entsprechend analoge Auslegungen lassen sich für RNA oder Proteine erzeugen. Sofern also eine Reaktion stattfindet, beginnt das umliegende Volumen entsprechend der erzeugten Menge an Molekülen zu leuchten bzw. weist Fluoreszenz auf. Dies ist ein indirekter Indikator, wie viele Moleküle auf der Kopie anbinden können.

Auch bevorzugt ist das Verfahren, dadurch gekennzeichnet, dass das enzymatische Reaktionssystem Enzyme umfasst, ausgewählt aus der Gruppe umfassend DNA-Polymerase, RNA-Polymerase und/oder reverse Transkriptase. Die Wahl des jeweiligen Enzyms richtet sich dabei nach dem gewünschten Array das durch das Herstellungsverfahren produziert werden soll. Der Fachmann weiß, welches Enzym für die Entstehung der entsprechenden Produktmoleküle gewählt werden muss, ohne selbst erfinderisch tätig zu werden. Beispielsweise wird bevorzugt eine DNA-Polymerase und/oder eine reverse Transkriptase eingesetzt, wenn die Produktmoleküle DNA sein sollen und ein DNA-Mikroarray hergestellt wird. Der Einsatz von RNA-Polymerase ist hingegen bevorzugt, wenn ein RNA-Mikroarray hergestellt wird und die Produktmoleküle RNA sind.

Weiterhin bevorzugt ist das Verfahren, dadurch gekennzeichnet, dass das chemisches Reaktionssystem einen zellfreien Mix umfasst, der aus DNA und/oder RNA entsprechende Proteine erzeugt.

Es ist außerdem bevorzugt, dass das enzymatische Reaktionssystem ein Proteinsynthetisierendes System ist, sodass beispielsweise Enzyme enthalten sind die DNA in RNA transkribieren und RNA in Protein translatieren. Durch die Wahl eines solchen Reaktionssystems kann ein Protein-Mikroarray mit Proteinen als Produktmoleküle hergestellt werden. Gerade die Herstellung von Proteinen als Produktmoleküle

Außerdem bevorzugt ist das Verfahren, dadurch gekennzeichnet, dass die Detektion zur Überwachung des Herstellungsprozesses eines Molekül-Mikroarrays verwendet wird. Diese Ausführungsform ist besonders bevorzugt, da es bisher nicht möglich war, den Herstellungsprozess eines Mikroarrays zu überwachen. Erst die Verknüpfung des Herstellungsprozesses mit der Echtzeit-Detektion erlaubt eine Überwachung bereits während der Array-Entstehung. Daraus ergeben sich zahlreiche Vorteile, da Fehlerquellen nun rechtzeitig erkannt und eliminiert werden können.

Es ist weiterhin bevorzugt, dass das Verfahren dadurch gekennzeichnet ist, dass es sich bei dem originären Array um ein planares Array handelt, bevorzugt ein Sequenzierchip der DNA oder RNA enthält.

Im Stand der Technik sind Methoden bekannt, in denen ein Detektionsfenster vorgesehen ist, mit welchem überwacht werden kann, ob sich bei der Befüllung des Geräts Luftblasen gebildet haben. Es ist bevorzugt, dass dieses Detektionsfenster für eine Echtzeit-Detektion der Produkt-Entstehung und damit als Kontrastkontrolle verwendet werden kann.

Auch bevorzugt ist das Verfahren, dadurch gekennzeichnet, dass nach Herstellung des Mikroarrays das Detektionsverfahren zusätzlich für eine Bindungs- oder Interaktionsmessung verwendet werden kann. Dieses Verfahren ist besonders vorteilhaft, da somit durch die Verwendung eines Detektionssystems sowohl die Herstellung des eigentlichen Arrays detektiert werden kann, aber auch nachfolgende Analysen durchgeführt werden können, für die das gleiche Detektionssystem zum Einsatz kommt. Es war überraschend, dass mit den Detektionssysteme der Erfindung auch nachfolgenden Untersuchungen durchgeführt werden können, ohne dass hier ein neues Detektionssystems eingesetzt werden muss. Dadurch kann der gleiche Aufbau beibehalten werden, wodurch das Verfahren und die anschließenden Analysen vereinfacht werden. Das Risiko, dass es zu Beschädigungen des Arrays kommen kann, wird durch die Verminderung des Arbeitsaufwands ebenfalls reduziert. Ebenso werden weniger Arbeitsschritte benötigt und nicht nur die Detektionseinheit kann wiederverwendet werden, sondern auch das gesamte Gerät, welches die Flüssigkeiten zur Erzeugung des Mikroarrays zuliefert, kann dann zur Zulieferung von zu untersuchenden Flüssigkeiten wie Zell-Lysate, Probenmaterialien oder Systemflüssigkeiten verwendet werden. Somit kann das Erzeugungsgerät direkt nach der Erzeugung auch als Analysegerät verwendet werden.

Auch beschrieben sind ein Mikroarray, hergestellt nach einem der genannten Verfahren, wobei die Herstellung in Echtzeit überwacht wird und eine Vorrichtung zur Echtzeit-Detektion von Molekülanlagerungen auf ein Empfänger-Oberfläche, umfassend
- eine Vorrichtung zur Herstellung eines Mikroarrays mittels einer enzymatischen Reaktion umfassend
   ∘ ein erstes originäres Arrays umfassend eine ersten Support-Oberfläche, an die mindestens ein Vorlagemolekül gebunden ist, wobei die erste Support-Oberfläche Referenzspots umfassend Referenzmoleküle umfasst,
   ∘ eine zweite Support-Oberfläche und und
- Detektionsmittel, das die Produktmolekülanlagerungen in Echtzeit detektieren und/oder messen kann, bevorzugt über ein genanntes Detektionsverfahren.

Mit einer solchen Vorrichtung kann gewährleistet werden, dass das Entstehen des Produkts noch während des Herstellungsprozesses erfasst werden kann und gegebenenfalls der Herstellungsprozess angepasst (verlängern, verkürzen etc.) werden kann.

Auch beschrieben ist ein Verfahren zur Herstellung und/oder zum Kopieren eines Mikroarrays, umfassend die Bereitstellung eines originären Mikroarrays, bevorzugt eines Nukleinsäure-Mikroarrays sowie einer Empfänger-Oberfläche, wobei durch eine enzymatische Reaktion Produktmoleküle erzeugt werden, die auf der Empfänger-Oberfläche als entsprechendes Mikroarray gelagert werden, dadurch gekennzeichnet, dass die Molekülanlagerung in Echtzeit detektiert und/oder gemessen wird.

Die Vorrichtung und das Verfahren erlauben damit noch während des Herstellungsprozesses die Prozess-Parameter anzupassen, so dass eine Kontrast- bzw. Qualitätskontrolle des entstehenden Produkts möglich ist. Entsprechend der jeweiligen Erzeugungsgeschwindigkeit des entstehenden Produkts (bevorzugt Kopie und/oder Derivat) kann die Verfahrenszeit angepasst werden.

Durch die vorliegende Erfindung sind alle Möglichkeiten der Echtzeit-Detektion einer Anbindung an eine Oberfläche in Kombination mit allen Möglichkeiten des Arraykopierens bzw. Arrayherstellens umfasst.

Auch beschrieben ist ein Kit zur Herstellung eine Mikroarrays, wobei die Herstellung in Echtzeit detektiert wird, umfassend
i. eine ersten Support-Oberfläche, umfassend Referenzspots umfassend Referenzmoleküle umfasst,
j. mindestens ein Vorlagemolekül,
k. eine Empfänger-Oberfläche,
l. ein enzymatisches und/oder chemisches Reaktionssystem und
m. mindestens ein Detektionsmittel, das die Produktmolekülanlagerungen in Echtzeit detektieren und/oder messen kann, bevorzugt über ein oben genanntes Detektionsverfahren.

Dabei ist besonders bevorzugt, dass die Vorlagemoleküle an die erste Support-Oberfläche gebunden sind.

Es war völlig überraschend, dass ein Kit hergestellt werden konnte, mit dem sich das erfindungsgemäße Verfahren durchführen lässt. Es war dabei nicht zu erwarten, dass die Komponenten des Kits dauerhaft gelagert werden können, ohne dabei ihre Funktion zu verlieren. Das Kit kann somit über einen langen Zeitraum gelagert werden und erleichtern daher die Durchführung des erfindungsgemäßen Verfahrens um ein Vielfaches.

### Ausführungsbeispiel

Der Einfachheit halber sind alle dargestellten Anwendungen in Form des Protein-Translators gezeigt (Nukleinsäure zum Protein). Dies stellt keine Einschränkung der Erfindung dar. Sämtliche Methoden sind auf alle Mikroarray-Kopiertechniken anwendbar. Durch geeignete Wahl der Geometrie, der Ausgangsmoleküle und der Amplifikationsmaterialien sind auch Anwendung für DNA zu DNA, DNA zu RNA, RNA zu Protein, RNA zu DNA denkbar und nicht nur auf diese limitiert.

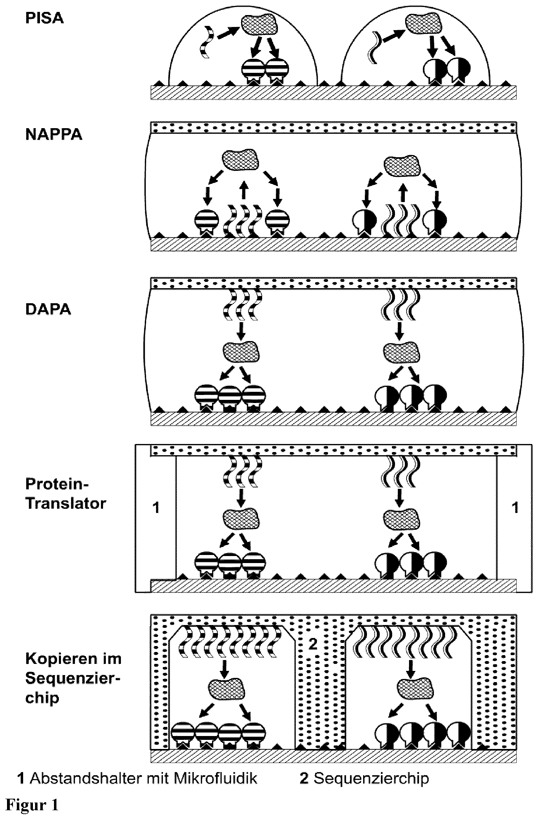

Figur 1 zeigt die Entwicklung der Mikroarray-Herstellungstechnik im Falle von DNA zu Protein. Beim PISA wurden die DNA und der Enzymmix gemischt und direkt auf die Fängeroberfläche gegeben. Dieses System erzeugt direkt die Proteine beim Herstellen des Arrays. Beim NAPPA wurde die DNA bereits auf der Oberfläche fixiert und dann später mit dem Enzymmix überschichtet. Somit liegt ein System vor, das erst die DNA-Arrays herstellt und später dann bei Bedarf die Proteine erzeugt. Beim DAPA sind die DNA-Fläche und die Fängeroberfläche getrennt. Das DNA-Array wird vorproduziert und kann nun mehrfach in ein Protein-Array kopiert werden. Beim Protein-Translator handelt es sich um ein System, welches über einen Abstandshalter gezielt Flüssigkeiten zuführen lässt und somit erlaubt die Kopierreaktion und/oder Herstellungsreaktion jederzeit zu starten. Zudem erlauben die Geometrie und die verwendeten Materialien des Protein-Translators ein direktes Detektieren der Anbindung der Proteine auf der Fängeroberfläche. Anstelle von Proteinen ist es aber auch möglich DNA, RNA oder jedes andere Produktmolekül zu erzeugen.

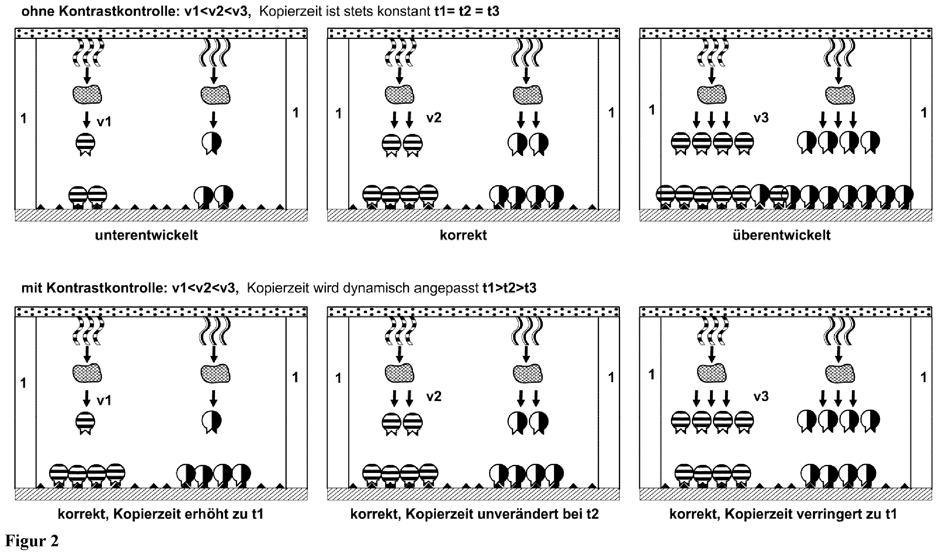

Figur 2 zeigt eine Skizze von unterschiedlich schnell laufenden Reaktionen. Bereits ein leicht geänderter pH-Wert, Salzgehalt oder Temperaturunterschied oder eine Varianz im Abstand des DNA-Arrays (Original) und der Empfängeroberfläche (Produkt/Kopie/Derivat) führen zu unterschiedlich schnellen biochemischen Reaktionen und damit zu unterschiedlich schneller Erzeugung der Produktmoleküle. Diese diffundieren dann ebenfalls unterschiedlich schnell, was zu einem unterschiedlich schnellen Entstehen des Produkts führt. Somit ist bei schnellen Reaktionen das Produkt überentwickelt, bei langsamen Reaktionen dahingehend unterentwickelt. Eine direkte Anpassung der Herstellungszeit über die erfindungsgemäße Echtzeit-Detektion erlaubt es gleichbleibend gute Produkte (Kopien/Derivate) zu erzeugen.

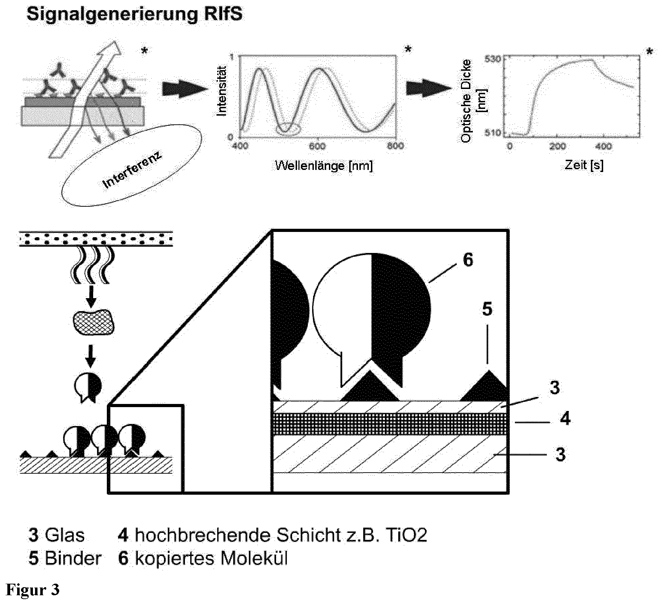

In Figur 3 wird ein Schema der Signalerzeugung der RIfS-Technik gezeigt (Verändert nach: http://barolo.ipc.uni-tuebingen.de/research/bilder/rifs-prin-antialising-%20englisch.jpg) . Es ist bevorzugt, dass diese Detektionsmethode für das erfindungsgemäße Verfahren verwendet wird. Einfallendes Licht erzeugt an der Oberfläche Interferenzen. Dies kann durch eine "vergrabene" hochbrechende Schicht, wie Titanoxid noch verstärkt werden. Mittels dieses bildgebenden Verfahrens kann direkt ein Video der Produktentstehung oder einer Bindung erzeugt werden. Diese Technik benötigt eine planare Oberfläche.

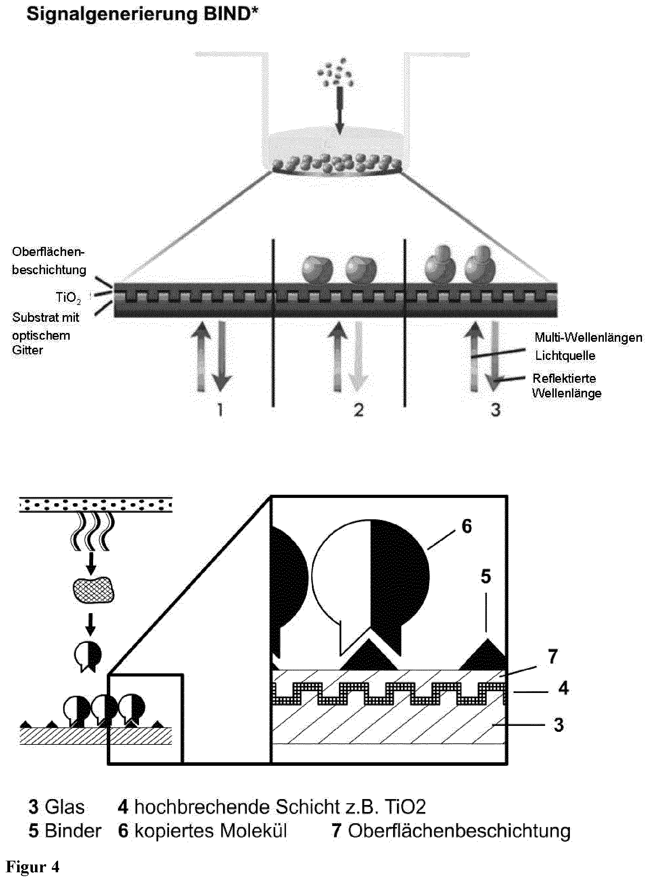

Figur 4 zeigt eine Schema der Signalerzeugung der BIND-Technik (Verändert nach: http://www.srubiosystems.com/Technology/index.html). Einfallendes weißes Licht erzeugt an der strukturierten hochbrechenden Schicht Interferenzen, die mit der Oberfläche wechselwirken. Durch unterschiedliche Interferenzen entstehen unterschiedliche Farbtöne, die wiederum auf die Oberflächendichte der Moleküle zurückgerechnet werden können. Diese Technik benötigt eine vergrabene Gitterstruktur aus einer hochbrechenden Schicht.

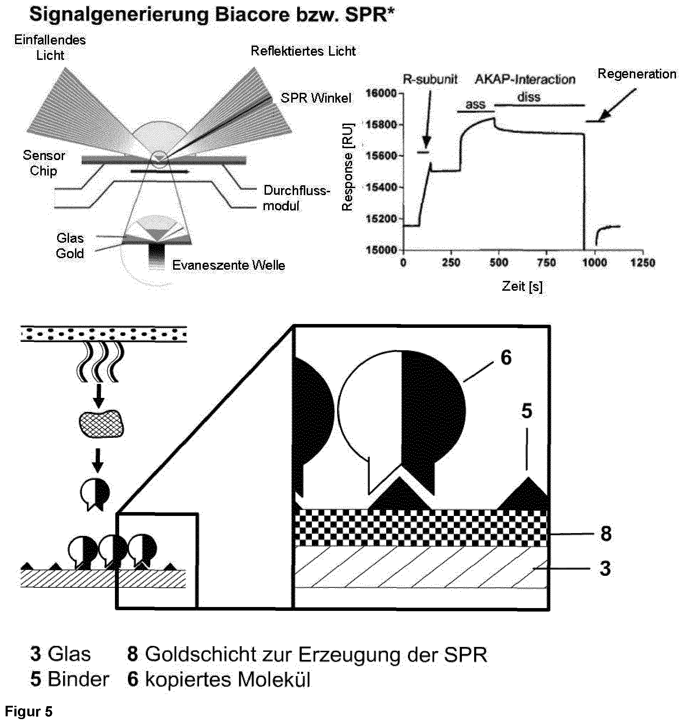

In Figur 5 wird ein Schema der Signalerzeugung der Biacore-Technik (Verändert nach: http://ars.els-cdn.com/content/image/1-s2.0-S0165993610002487-gr1.jpg und http://ars.els-cdn.com/content/image/1-s2.0-S0022283600936623-gr2.gif) gezeigt. Unter einem vorgegebenen Winkel einfallendes Licht wechselwirkt an der Oberfläche mit den Plasmonen und wird dann unter einem leicht veränderten Winkel ausgestrahlt (SPR Winkel). Durch Anbinden von Molekülen an die Oberfläche werden die Plasmonen "verstimmt" und der Winkel verändert sich. Hierdurch erfolgt eine Echtzeit-Detektion. Diese Technik benötigt eine Goldbeschichtung.

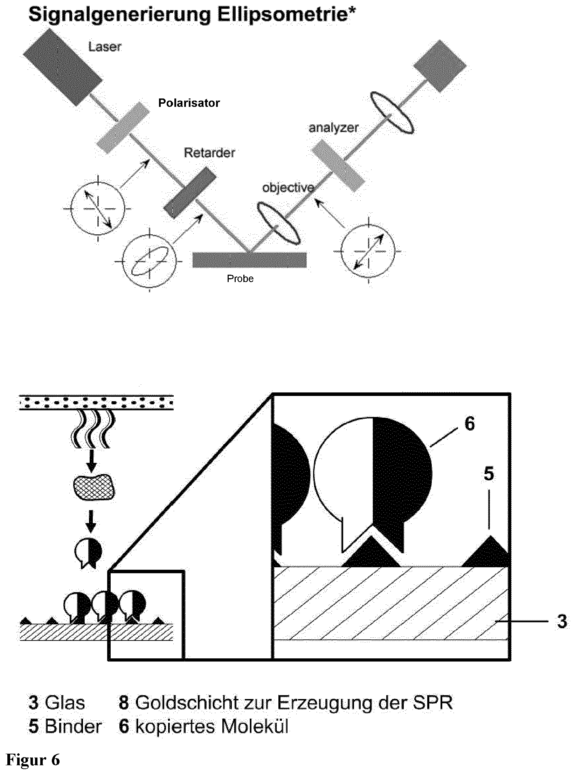

Figur 6: Schema der Signalerzeugung der Ellipsometrie (Verändert nach: http://www.optrel.de/pdfs/flyer/imaging-elli.pdf am 20.05.2012). Polarisiertes Licht wird auf eine Oberfläche eingestrahlt. Der Rückstreuanteil des Lichtes ist dabei von der Polarisationsrichtung abhängig, d.h. die längs- und quer-polarisierten Lichtanteile werden unterschiedlich reflektiert, was zu einer Rotation der Polaisationshauptachse führt. Diese Oberfläche benötigt keine Oberflächenmodifikationen, ist allerdings langsam und nicht so sensitiv wie die vorhergehenden Techniken.

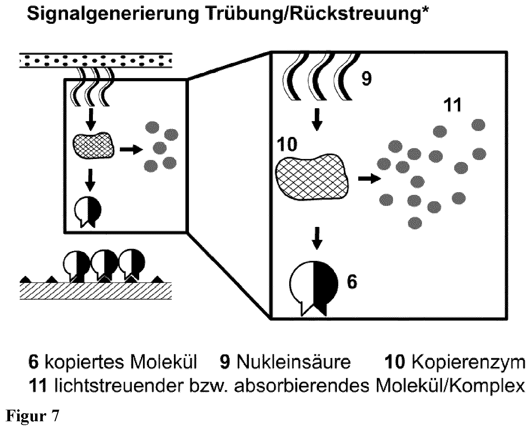

In Figur 7 wird ein Schema der Signalerzeugung der Trübungsmessung gezeigt. Vorteilhaft ist, dass hierzu ein handelsübliches Mikroskop verwendet werden kann. Es wird Licht eingestrahlt. Findet eine Reaktion statt, so trübt sich das Medium oberhalb des entstehenden Spots. Die Intensität der Trübung ist ein Maß für die Menge an erzeugten Molekülen. Es ist handelt sich dabei um ein indirektes Maß für die Menge an auf der Oberfläche angelagerten Molekülen. Diese Technik benötigt keine Oberflächenmodifikationen, sondern lediglich ein signalgenerierendes Molekül im Reaktionsmix.

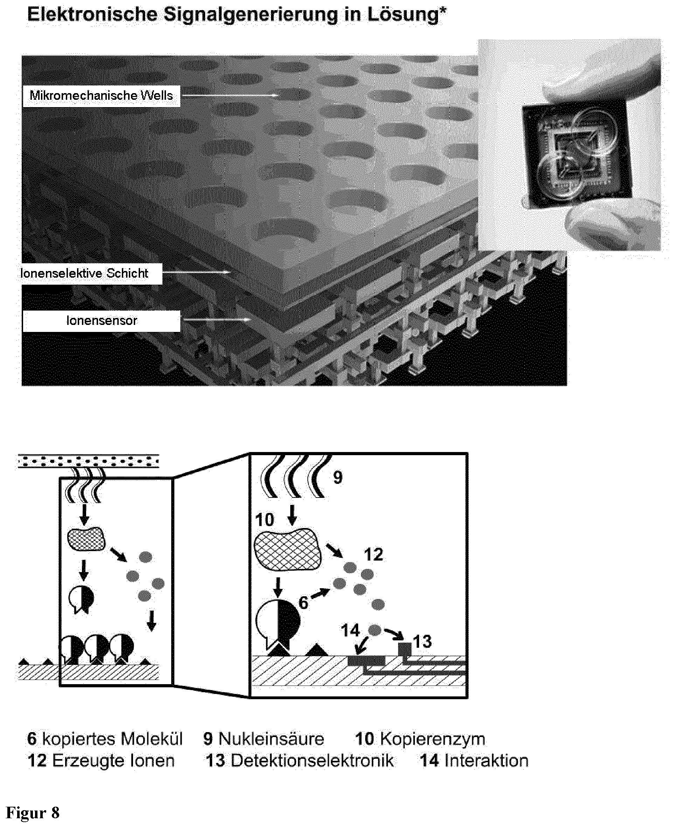

Figur 8 zeigt ein Schema der Signalerzeugung der Ionenmessung (Verändert nach: http://de-de.invitrogen.com/etc/medialib/images/Sequencing/Semiconductor-Sequencing/Ion-Torrent.Par. 79124.Image.660.400.1.Step-2.gifund http://www.technologyreview.com/files/49534/sequencing_x220.jpg). Bereits im Ion Torrent wurde eine quantitative Detektion einer biochemischen Reaktion mittels Ionen-Detektion erreicht. Durch Einbetten entsprechender Elektroden in das Kopiersubstrat, ist dies ebenfalls eine Detektionsalternative. Jedoch ist das Erzeugen der Elektroden kostenaufwendig.

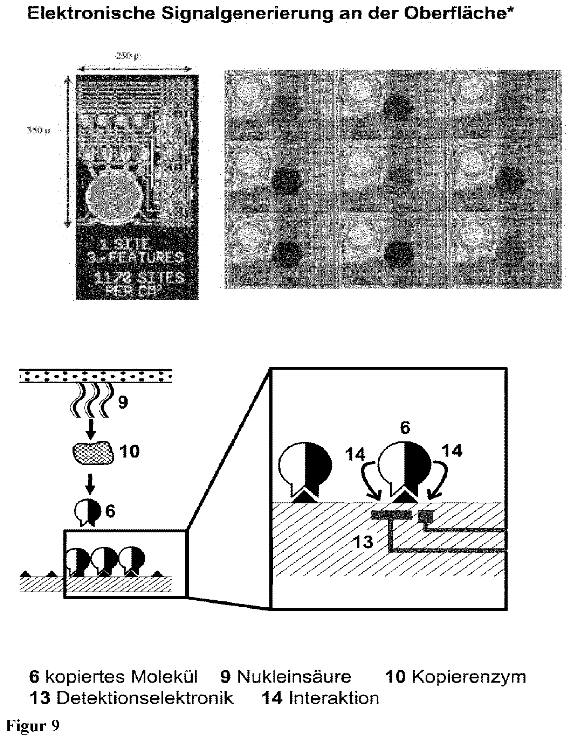

Figur 9 zeigt ein Schema der Signalerzeugung der Ionenmessung an der Oberfläche (Verändert nach: http://ars.els-cdn.com/content/image/1-s2.0-S0956566304002544-gr1.jpg). Hierbei werden Interdigital-Elektroden genutzt um gezielt DNA und Proteine zu erzeugen und später auf Bindung zu vermessen. Ein identisches System kann ebenfalls dazu verwendet werden, um die Anlagerung von Molekülen auf der Empfängeroberfläche zu vermessen. Hierzu müssen entsprechende Elektroden in die Empfängeroberfläche eingebracht werden.

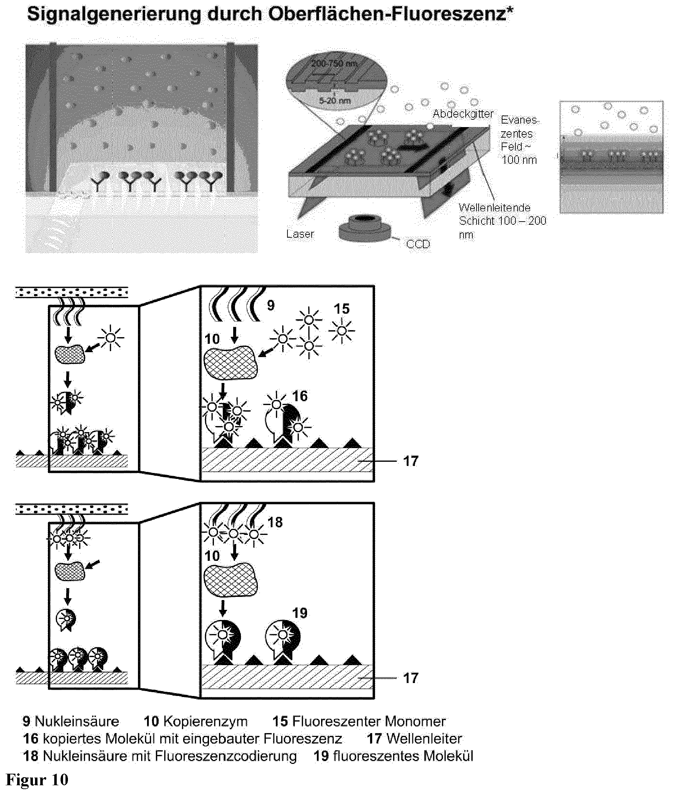

In Figur 10 wird ein Schema der Signalerzeugung der Fluoreszenz an der Oberfläche gezeigt (Verändert nach http://www.zeptosens.com/en/pdf/planar_wave_guide.pdf und http://www.lbb.ethz.ch/ Equipment/zeptoreader/ZeptoREADER_Principle.jpg?hires). Hierbei wird die Empfängeroberfläche als Wellenleiter verwendet, der über ein evaneszentes Feld nur Oberflächennahe und damit gebundene Fluorophore anregt. Fluoreszenz kann hier über eingebaute fluoreszente Monomere oder über Fluoreszenz der erzeugten Moleküle entstehen.

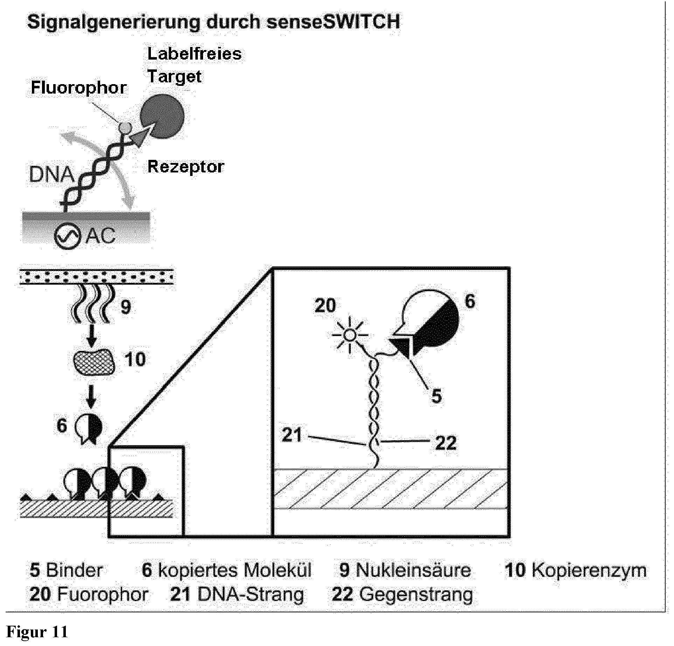

Figur 11 zeigt ein Schema der Signalerzeugung durch Fluoreszenzquenching an der Oberfläche (Verändert nach: http://dynamic-biosensors.com/index.php/bio-sensortechnology/switchsense-technology-alias.html). Durch Wechselspannung wird eine Bewegung induziert. Der mittlere Abstand zur Oberfläche ist ein Maß für die Masse des Moleküls. Daher kann über eine Ab- bzw. Zunahme der Fluoreszenz bestimmt werden, ob eine Bindung stattgefunden hat. Hierzu wurde die Empfängeroberfläche mit DNA oder einem beweglichen langen Molekül beschichtet.

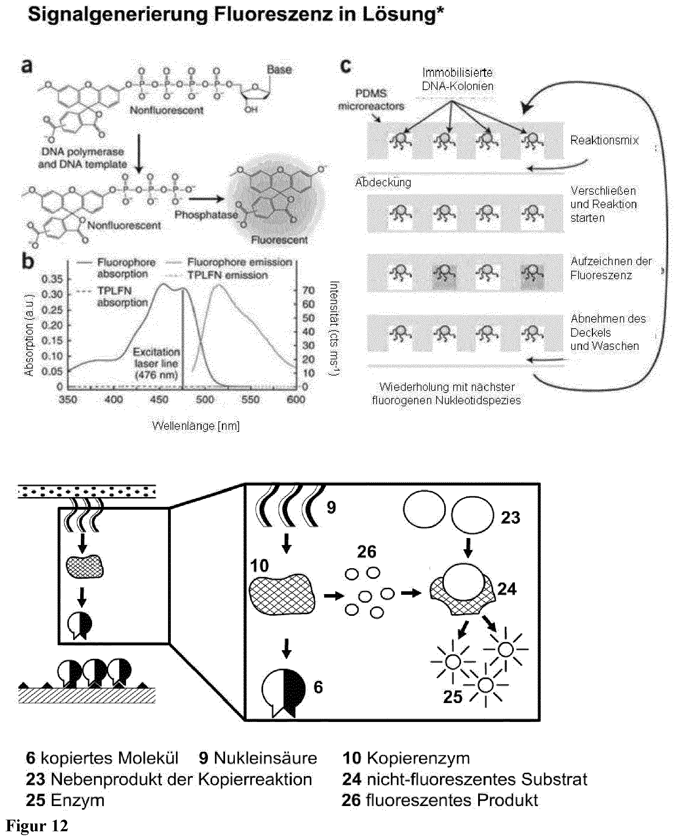

In Figur 12 wird ein Schema der Signalerzeugung durch Fluoreszenz oder Luminiszenz in Lösung gezeigt (Verändert nach: http://www.nature.com/nmeth/journal/v8/n7/images_article/nmeth.1629-F1.jpg). Durch die Kopplung von biochemischen Reaktionen an entstehende Beiprodukte wie Pyrophosphate lassen sich Luminiszenz oder Fluoreszenz erzeugen. Hierzu wurde dem Reaktionsmix sowohl ein entsprechendes zusätzliches Enzymsystem als auch Substrate beigemischt.

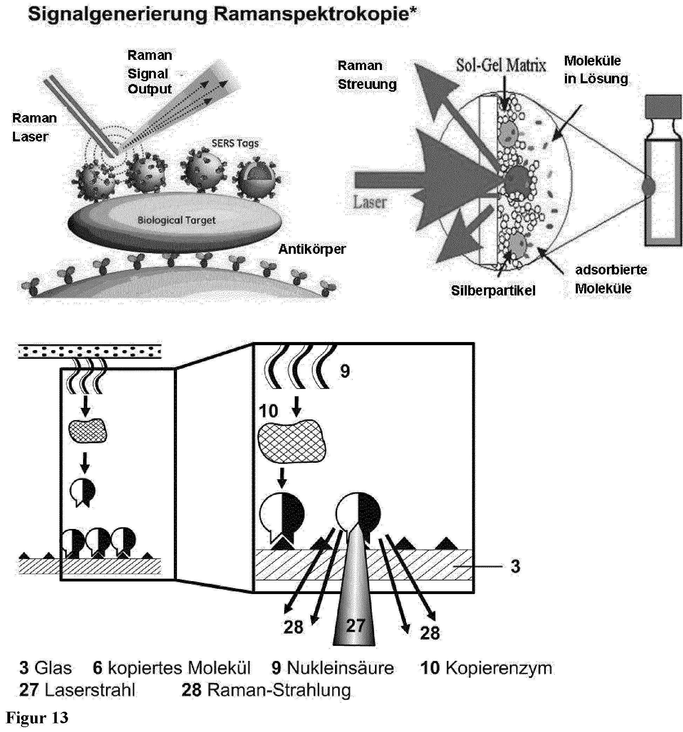

Figur 13 zeigt ein Schema der Signalerzeugung durch Oberflächenverstärkte-Ramanspektroskopie (Verändert nach http://spie.org/Images/Graphics/Newsroom/Imported-2011/003645/003645_10_fig2.jpg und http://sbir.gsfc.nasa.gov/SBIR/successes/images/9-028pic.jpg). Durch Laserstrahlung lassen sich Ramanspektren induzieren. Dieser Effekt lässt sich an Oberflächen verstärken. Es ist bevorzugt, dabei metallische Nanopartikel auf der Oberfläche aufgebracht werden. Für diese Ausführungsform wird zusätzlich ein sensitiver Detektor zur Analyse der Ramanstrahlung und eine entsprechende Optik benötigt.

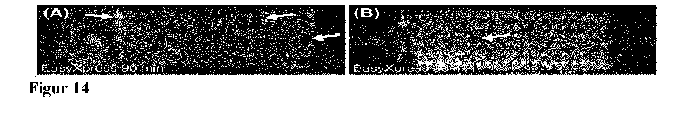

Figur 14 zeigt den Nachweis einer "Proteinkopie". Es konnte gezeigt werden, dass mittels einer erfindungsgemäßen Vorrichtung eine Protein-Kopie von einem DNA-Array hergestellt werden kann und gleichzeitig die Entstehung dieses Produktes in Echtzeit detektiert werden konnte. Die Proteine wurden als Endpunkt mit spezifischen fluoreszent gelabelten Antikörpern angefärbt. Zum Vergleich wurde in Zusammenarbeit ein DAPA (A) und eine Proteinkopie im Handgerät (B) durchgeführt. In allen Fällen konnte eine Proteinkopie erzeugt werden. Es zeigte sich jedoch, dass im Handgerät eine Kopie schneller ist als im DAPA. Die Kopie (B) ist zudem überentwickelt. Genau hierfür wird eine Echtzeitdetektion benötigt. Die weißen und roten Pfeile zeigen Fehler in den Kopien an (DAPA (A): weiß = Kratzer, rot = Schmierer durch Membranfasern, Handgerät (B), weiß = Luftblase und somit keine Kopie, rot = leichter Flüssigkeitsdrift und damit Schlieren).

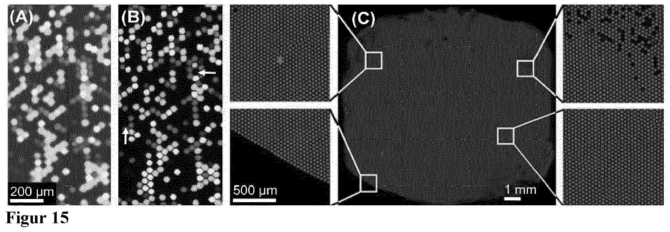

Figur 15 zeigt den Nachweis einer DNA-Kopie. Dabei wurde DNA aus einem Sequenzierchip (A) auf eine Oberfläche kopiert (B). Die Kopie und der Sequenzierchip wurden dann mit spezifischen Hybridisierungssonden angefärbt. Zwei grüne Pixel (weiße Pfeile in B) konnten nicht kopiert werden. Der Sequenzierchip erscheint aufgrund seiner 3D-Struktur unscharf. Die DNA-Kopierreaktion (C) konnte großflächig mit ca. 110.000 Kavitäten durchgeführt werden.

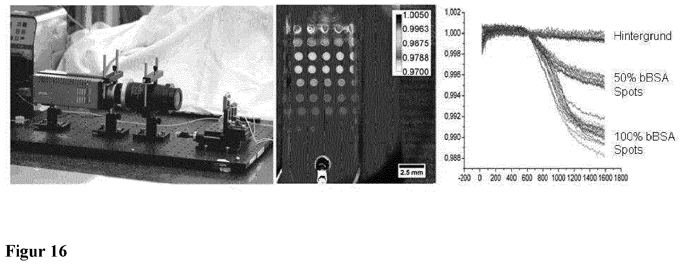

Figur 16 zeigt den Nachweis der labelfreien Messung mittels iRIfS. In den verwendeten Durchflusskammern konnten Bindungsmessungen (Abbildung mitte) und molekulare Anlagerungen bildgebend nachgewiesen werden. Ebenfalls war eine Echtzeit-Detektion (Abbildung rechts) von nahezu 100 verschiedenen Punkten möglich.

### Referenzen

[1] M. He, O. Stoevesandt, E. A. Palmer, F. Khan, O. Ericsson, and M. J. Taussig, "Printing protein arrays from DNA arrays," Nature Methods, vol. 5, no. 2, pp. 175-177, Feb.2008.
[2] H. Chandra and S. Srivastava, "Cell-free synthesis-based protein microarrays and their applications," Proteomics, vol. 10, no. 4, pp. 717-730, Feb.2010.
[3] M. Y. He and M. J. Taussig, "Single step generation of protein arrays from DNA by cell-free expression and in situ immobilisation (PISA method)," Nucleic Acids Research, vol. 29, no. 15, p. art-e73, Aug.2001.
[4] J. Sobek, K. Bartscherer, A. Jacob, J. D. Hoheisel, and P. Angenendt, "Microarray technology as a universal tool for high-throughput analysis of biological systems," Combinatorial Chemistry & High Throughput Screening, vol. 9, no. 5, pp. 365-380, June2006.
[5] N. Ramachandran, E. Hainsworth, B. Bhullar, S. Eisenstein, B. Rosen, A. Y. Lau, J. C. Walter, and J. LaBaer, "Self-assembling protein microarrays," Science, vol. 305, no. 5680, pp. 86-90, July2004.
[6] N. Ramachandran, S. Srivastava, and J. LaBaer, "Applications of protein microarrays for biomarker discovery," Proteomics Clinical Applications, vol. 2, no. 10-11, pp. 1444-1459, Oct.2008
[7] http://barolo.ipc.uni-tuebingen.de/markierungsfrei.php?lang=en&show=10
[8] http://www.biacore.com/lifesciences/technology/introduction/Flow_cells/ index.html
[9] http://www.optrel.de/pdfs/flyer/imaging-elli.pdf
[10] http://www.youtube.com/embed/yVf2295JqUg
[11] A. Kumar, Z. Liang, Chemical nanoprinting - a novel method for fabricating DNA microchips,Nucleic Acids Res, vol. 29, pp. e2, 2001
[12] Q. Du, O. Larsson, H. Swerdlow, Z. Liang, DNA immobilization: Silanized nucleic acids and nanoprinting, 2005, pp. 45-61
[13] A. A. Yu, G. S. Taylor, A. Guiseppe-Elie, H. I. Smith, F. Stellacci, Supramolecular nanostamping: Using DNA as movable type, Nano Letters, vol. 5, pp. 1061-1064, 2005
[14] S. Kim, G. Lim, S. E. Lee, J. Lee, K. Yun, J. Park, DNA chip replication for a personalized DNA chip, Biomolecular Engineering, vol. 23, pp. 129-134, 2006
[15] J. Kim, R. M. Crooks, Transfer of surface polymerase reaction products to a secondary platform with conservation of spatial registration, J. Amer. Chem. Soc., vol. 128, pp. 12076-12077, 2006

## Patentansprüche

1. Verfahren zur Herstellung eines Mikroarrays, umfassend
a. Bereitstellung eines ersten originären Arrays umfassend eine ersten Support-Oberfläche, an die mindestens ein Vorlagemolekül gebunden ist,
b. Bereitstellung einer zweiten Support-Oberfläche (Empfänger-Oberfläche), die in eine räumliche Orientierung zur ersten Support-Oberfläche gebracht wird
c. Bereitstellung einer Flüssigkeit, enthaltend ein enzymatisches und/oder chemisches Reaktionssystem, zwischen der ersten und der zweiten Oberfläche, so dass Bereiche der beiden Oberflächen über die Flüssigkeit miteinander in Kontakt stehen
d. Herstellung eines Produktmoleküls mittels des Vorlagemoleküls und des enzymatischen und/oder chemischen Reaktionssystems,
e. Transfer des Produktmoleküls zu der zweiten Support-Oberfläche über die Flüssigkeit zwischen der ersten und der zweiten Support-Oberfläche, wobei eine Korrelation besteht zwischen dem Bindungsort des Vorlagemoleküls an der ersten Support-Oberfläche und der Anlagerung des entsprechenden Produktmoleküls an der zweiten Support-Oberfläche,
f. wobei die Anlagerung des Produktmoleküls an der Empfänger-Oberfläche in Echtzeit detektiert wird,
wobei die erste Support-Oberfläche Referenzspots umfassend Referenzmoleküle umfasst, wobei aus den Referenzmolekülen in Schritt d) Produktmoleküle entstehen und die Entstehung dieser Produktmoleküle gemäß Schritt e) und f) in Echtzeit detektiert wird und wobei das Verfahren abgebrochen wird sobald die Referenzspots eine vorgegebene Referenzgröße erreicht haben.

2. Verfahren nach Anspruch 1,
**dadurch gekennzeichnet, dass**
zwischen der ersten und der zweiten Support-Oberfläche ein Spalt besteht, der vor, nach oder während der räumlichen Orientierung der ersten und zweiten Support-Oberfläche mit der Flüssigkeit gefüllt wird.

3. Verfahren nach einem oder mehreren der vorhergehenden Ansprüche,
**dadurch gekennzeichnet, dass**
es sich bei der Echtzeit-Detektion um ein labelfreies Verfahren handelt, bevorzugt um eine labelfreies Verfahren, das den Massezuwachs, die Änderung des Brechungsindex, die Änderung von optischen, magnetischen, elektrischen und/oder elektromagnetischen Eigenschaften detektiert.

4. Verfahren nach mindestens einem der Ansprüche 1 bis 2,
**dadurch gekennzeichnet, dass**
es sich bei der Echtzeit-Detektion um ein Verfahren handelt, welches ein Label verwendet.

5. Verfahren nach einem oder mehreren der vorhergehenden Ansprüche, **dadurch gekennzeichnet, dass**
die Echtzeit-Detektion die Empfänger-Oberfläche als Wellenleiter verwendet.

6. Verfahren nach mindestens einem der vorhergehenden Ansprüche,
**dadurch gekennzeichnet, dass**
die Detektion der Anlagerung des Produktmoleküls durch eine Methode erfolgt, ausgewählt aus der Gruppe umfassend physikalische Methoden, elektrische Methoden, chemische Methoden, Fluoreszenzmessungen, Lumineszenzmessungen, Spektroskopie, Adsorptionsmessungen, Polarisationsmessungen, Reflektometrische Interferenzspektroskopie, bildgebende reflektometrische Interferenzspektroskopie, Oberflächenplasmonenresonanzspektroskopie, biacore, Ellipsometrie, Polarisations-Anisotropie, Trübungsmessung, pH-Messung, Messung der verfügbaren H⁺ Ionen, Messung mit angeregter Oberflächenfluoreszenz, Interne Totalreflexionsfluoreszenzmikroskopie, Messung mit gequenchter Oberflächenfluoreszenz, Messungen mit evaneszenter Feldanregung und/oder Messung mit Ramanspektrokopie.

7. Verfahren nach mindestens einem der vorhergehenden Ansprüche,
**dadurch gekennzeichnet, dass**
es sich bei dem hergestellten Mikroarray, um einen DNA-, RNA-, Protein-Array und/oder Array aus synthetischen Molekülen handelt.

8. Verfahren nach mindestens einem der vorhergehenden Ansprüche,
**dadurch gekennzeichnet, dass**
das Vorlagemolekül ausgewählt ist aus der Gruppe umfassend, DNA, RNA, genomische DNA, klonierte DNA Fragmente, Plasmid-DNA, cDNA, PCR-Produkte, synthetisierte DNA-Produkte, synthetisierte DNA-Oligonukleotide, mRNA und/oder synthetisierte RNA.

9. Verfahren nach mindestens einem der vorhergehenden Ansprüche,
**dadurch gekennzeichnet, dass**
der originäre Array ausgewählt ist aus der Gruppe umfassend DNA-Array oder RNA-Array und/oder
es sich bei dem originären Array um einen planaren Array handelt, bevorzugt ein Sequenzierchip der DNA oder RNA enthält.

10. Verfahren nach mindestens einem der vorhergehenden Ansprüche,
**dadurch gekennzeichnet, dass**
das enzymatische Reaktionssystem nach c) Enzyme umfasst, ausgewählt aus der Gruppe umfassend DNA-Polymerase, RNA-Polymerase und/oder reverse Transkriptase und/oder
das chemisches Reaktionssystem einen zellfreien Mix umfasst, der aus DNA und/oder RNA entsprechende Proteine erzeugt.

11. Verfahren nach mindestens einem der vorhergehenden Ansprüche,
**dadurch gekennzeichnet, dass**
die Detektion zur Überwachung des Herstellungsprozesses eines Molekül-Mikroarrays verwendet wird.

12. Verfahren nach mindestens einem der vorhergehenden Ansprüche,
**dadurch gekennzeichnet, dass**
nach Herstellung des Mikroarrays das Detektionsverfahren zusätzlich für eine Bindungs- oder Interaktionsmessung verwendet werden kann.

## Claims

1. A method for producing a microarray, comprising
a. providing a first original array comprising a first support surface, to which at least one template molecule is bound,
b. providing a second support surface (receiver surface), which is brought into a spatial orientation relative to the first support surface
c. providing a liquid, containing an enzymatic and/or chemical reaction system, between the first and second surfaces, so that regions of the two surfaces are in contact with one another via the liquid,
d. producing a product molecule using the template molecule and the enzymatic and/or chemical reaction system,
e. transferring the product molecule to the second support surface via the liquid between the first and second support surfaces, wherein a correlation exists between the binding site of the template molecule to the first support surface and the accumulation of the corresponding product molecule on the second support surface,
f. wherein the accumulation of the product molecule on the receiver surface is detected in real time,
wherein the first support surface comprises reference spots that comprise reference molecules, wherein product molecules are produced from these reference molecules in step d), and the production of these product molecules according to steps e) and f) is detected in real time, and wherein the method is terminated as soon as a predefined reference size has been reached.

2. The method according to claim 1,
**characterized in that**
a gap exists between the first and second support surfaces, which is filled with the liquid before, after or during the spatial orientation of the first and second support surfaces

3. The method according to one or more of the preceding claims,
**characterized in that**
the real time detection involves a label-free method, preferably a label-free method that detects the mass growth, the change in the refractive index, or the change in optical, magnetic, electric and/or electromagnetic properties.

4. The method according to at least one of claims 1 to 2,
**characterized in that**
the real-time detection involves a method that uses a label.

5. The method according to one or more of the preceding claims,
**characterized in that**
the real-time detection uses the receiver surface as a waveguide.

6. The method according to at least one of the preceding claims,
**characterized in that**
the accumulation of the product molecule is detected by a method chosen from the group comprising physical methods, electrical methods, chemical methods, fluorescence measurements, luminescence measurements, spectroscopy, absorption measurements, polarization measurements, reflectometric interference spectroscopy, imaging reflectometric interference spectroscopy, surface plasmon resonance spectroscopy, biacore, ellipsometry, polarization anisotropy, turbidity measurement, pH measurement, measurement of available H⁺ ions, measurement with excited surface fluorescence, internal total reflection fluorescence microscopy, measurement using quenched surface fluorescence, measurements using evanescent field excitation and/or measurement using Raman spectroscopy.

7. The method according to at least one of the preceding claims,
**characterized in that**
the microarray that is produced is a DNA array, an RNA array, a protein array and/or an array of synthetic molecules.

8. The method according to at least one of the preceding claims,
**characterized in that**
the template molecule is chosen from the group comprising DNA, RNA, genomic DNA, cloned DNA fragments, plasmid DNA, cDNA, PCR products, synthesized DNA products, synthesized DNA oligonucleotides, mRNA and/or synthesized RNA.

9. The method according to at least one of the preceding claims,
**characterized in that**
the original array is chosen from the group comprising DNA array and RNA array and/or
the original array is a planar array, preferably a sequencing chip that contains DNA or RNA

10. The method according to at least one of the preceding claims
**characterized in that**
the enzymatic reaction system according to c) comprises enzymes, chosen from the group comprising DNA polymerase, RNA polymerase and/or reverse transcriptase and/or
the chemical reaction system comprises a cell-free mixture, which produces from DNA and/or RNA corresponding proteins.

11. The method according to at least one of the preceding claims,
**characterized in that**
the detection is used for monitoring the production process of a molecule microarray.

12. The method according to at least one of the preceding claims,
**characterized in that,**
following production of the microarray, the detection method can also be used for a binding measurement or an interaction measurement.

## Revendications

1. Procédé de production d'un microréseau, comprenant
a. la fourniture d'un premier réseau initial comprenant une première surface de support, à laquelle est fixée au moins une molécule modèle,
b. la fourniture d'une seconde surface de support (surface réceptrice), qui est amenée à la première surface de support dans l'orientation spatiale
c. la fourniture d'un liquide contenant un système de réaction enzymatique et/ou chimique, entre la première et la seconde surface, de sorte que les zones des deux surfaces sont en contact l'une avec l'autre par le biais du liquide
d. la production d'une molécule de produit au moyen de la molécule modèle et du système de réaction enzymatique et/ou chimique,
e. le transfert de la molécule de produit sur la seconde surface de support par le biais du liquide entre la première et la seconde surfaces de support, dans lequel il existe une corrélation entre le site de liaison de la molécule modèle à la première surface de support et l'amas de la molécule de produit correspondant sur la seconde surface de support,
f.dans lequel l'amas de la molécule de produit sur la surface réceptrice est détecté en temps réel,
dans lequel la première surface de support comprend des spots de référence comprenant des molécules de référence, dans lequel les molécules de produit proviennent des molécules de référence à l'étape d) et la formation de ces molécules de produit selon l'étape e) et f) est détectée en temps réel, et dans lequel le procédé se termine dès que les spots de référence ont atteint une taille de référence prédéterminée.

2. Procédé selon la revendication 1,
**caractérisé en ce**
**qu'**il existe entre la première et la seconde surfaces de support un écart qui est rempli de liquide, avant, après ou pendant l'orientation spatiale de la première et de la seconde surface de support.

3. Procédé selon l'une ou plusieurs des revendications précédentes,
**caractérisé en ce que**
la détection en temps réel est un procédé sans étiquette, de préférence un procédé sans étiquette qui détecte l'augmentation de la masse, le changement d'indice de réfraction, le changement de propriétés optiques, magnétiques, électriques et/ou électromagnétiques.

4. Procédé selon au moins l'une des revendications 1 et 2,
**caractérisé en ce que**
la détection en temps réel est un procédé utilisant une étiquette.

5. Procédé selon l'une ou plusieurs des revendications précédentes, **caractérisé en ce que**
la détection en temps réel utilise la surface réceptrice en tant que guide d'ondes.

6. Procédé selon au moins l'une des revendications précédentes,
**caractérisé en ce que**
la détection de l'amas de la molécule de produit est réalisée par un procédé choisi dans le groupe comprenant des procédés physiques, des procédés électriques, des procédés chimiques, des mesures de la fluorescence, des mesures de la luminescence, la spectroscopie, des mesures d'adsorption, des mesures de polarisation, la spectroscopie d'interférence réflectométrique, l'imagerie par spectroscopie d'interférence réflectométrique, la spectroscopie par résonance plasmonique de surface, BIAcore, l'ellipsométrie, l'anisotropie de polarisation, la mesure de la turbidité, la mesure du pH, la mesure des ions H⁺ disponibles, la mesure de la fluorescence de surface excitée, la microscopie de fluorescence à réflexion interne totale, la mesure de fluorescence de surface trempée, les mesures avec excitation de champ évanescent et/ou la mesure avec la spectroscopie Raman.

7. Procédé selon au moins l'une des revendications précédentes,
**caractérisé en ce que**
le microréseau produit est un réseau d'ADN, d'ARN, de protéines et/ou un réseau de molécules synthétiques.

8. Procédé selon au moins l'une des revendications précédentes,
**caractérisé en ce que**
la molécule modèle est choisie dans le groupe comprenant l'ADN, l'ARN, l'ADN génomique, des fragments d'ADN clonés, l'ADN plasmidique, l'ADNc, les produits PCR, les produits d'ADN synthétisés, les oligonucléotides d'ADN synthétisés, l'ARNm et/ou l'ARN synthétisé.

9. Procédé selon au moins l'une des revendications précédentes,
**caractérisé en ce que**
le réseau initial est choisi dans le groupe comprenant le réseau d'ADN ou le réseau d'ARN et/ou
le réseau initial est un réseau plan, de préférence une puce de séquençage qui contient de l'ADN ou de l'ARN.

10. Procédé selon au moins l'une des revendications précédentes,
**caractérisé en ce que**
le système de réaction enzymatique après c) comprend des enzymes choisies dans le groupe comprenant l'ADN polymérase, l'ARN polymérase et/ou la transcriptase inverse et/ou
le système de réaction chimique comprend un mélange exempt de cellules qui produit des protéines correspondantes à partir d'ADN et/ou d'ARN.

11. Procédé selon au moins l'une des revendications précédentes,
**caractérisé en ce que**
la détection est utilisée pour surveiller le processus de production d'un microréseau de molécules.

12. Procédé selon au moins l'une des revendications précédentes,
**caractérisé en ce que**
le procédé de détection peut également être utilisé pour une mesure de la liaison ou de l'interaction après la production du microréseau.
